# EUROPEAN PATENT SPECIFICATION

(11) **EP 4 201 645 B1**
(45) Date of publication and mention of the grant of the patent: **29.01.2025**
(21) Application number: 22214728.2
(22) Date of filing: 19.12.2022
(51) Int. Cl.: B29C 63/02, B32B 27/18

(54) **APPARATUS AND METHOD FOR MAKING A CONTAINER WHICH COMPRISES A SUPPORTING SKELETON AND A FILM COUPLED TO THE SUPPORTING SKELETON AND RELATED CONTAINER**
VORRICHTUNG UND VERFAHREN ZUR HERSTELLUNG EINES BEHÄLTERS MIT EINEM STÜTZGERÜST UND EINER AN DAS STÜTZGERÜST GEKOPPELTEN FOLIE SOWIE ZUGEHÖRIGER BEHÄLTER
APPAREIL ET PROCÉDÉ DE FABRICATION D'UN RÉCIPIENT QUI COMPREND UN SQUELETTE DE SUPPORT ET UN FILM COUPLÉ AU SQUELETTE DE SUPPORT ET RÉCIPIENT ASSOCIÉ

(30) Priority: 23.12.2021 IT 202100032426
(43) Date of publication of application: 28.06.2023
(73) Proprietor: G. Mondini SpA, 25033 Cologne Bresciano (BS) (IT)
(72) Inventor: MONDINI, Giovanni, deceased (IT)
(74) Representative: Ponchiroli, Simone

(56) References cited:
- WO-A2-2004/052644
- WO-A2-2012/122427
- JP-A- 2009 302 491
- US-A1- 2006 121 613

## Description

This invention relates to an apparatus and a method for making a container which comprises a supporting skeleton and a film coupled to the supporting skeleton, as well as the container which can be made in this way. In particular, this invention relates to a thermoforming apparatus and a method for making a container which comprises a supporting skeleton and a thermoformable film coupled to the supporting skeleton, as well as the container which can be made in this way. In more detail, this invention is preferably intended for making containers used in the food sector, which may be intended to contain for example fresh products such as meats and cheeses.

There are already many prior art thermoforming apparatuses which allow a container to be made by coupling a thermoformable film, which advantageously may be multi-layered, to a supporting skeleton. In more detail, the thermoformable film and the supporting skeleton are coupled as a result of thermoforming of the thermoformable film on the supporting skeleton, in such a way that they adhere to each other. The thermoforming is carried out by feeding the thermoformable film and the supporting skeleton to a thermoforming device, whose technical features are known to a person expert in the sector, activating the thermoforming device, thermoforming the thermoformable film on the supporting skeleton and finally moving the containers made in this way towards an outfeed station. An example of a container made by thermoforming the thermoformable film on the supporting skeleton is described in US 2006/121613 A1, in which the container described comprises a layer of plastic material and a layer which constitutes a barrier to oxygen.

This invention can be applied with any type of supporting skeleton. In most prior art containers of this type, the supporting skeleton is constituted of a paper and cardboard industry article, that is to say, a cellulose material-based article (such as paper or paperboard). However, the supporting skeleton may be constituted of different materials, for example of a plastic material-based article or of a metal material-based article (such as aluminium). Supporting skeletons constituted of an article based on multiple different materials (such as, for example, cellulose material and plastic material) are also possible.

In containers comprising a supporting skeleton and a thermoformable film coupled to the supporting skeleton, one factor which affects the quality of the container is adherence between the thermoformable film and the supporting skeleton.

In fact, if the thermoformable film and the supporting skeleton do not adhere well to each other, defects may arise in the container. One possible defect due to nonoptimal adherence may be, for example, a bubble, in which the thermoformable film extends more than the optimum amount and at least one portion of it is detached from the supporting skeleton. Other possible defects due to nonoptimal adherence between the thermoformable film and the supporting skeleton may be, for example, folds in the thermoformable film and/or scratches and/or zones without the thermoformable film.

In general, containers which have defects due to nonoptimal coupling between the thermoformable film and the supporting skeleton are considered to be defective containers and are rejected. In fact, usually, these defects may compromise container operation in terms of suitable preservation of the product contained (for example if there is a defect, such as a bubble, in the sealing zone it is possible that the seal of the final package is compromised and, as time passes, the product contained deteriorates). Moreover, containers with defects of the type described above may be unappealing for consumers (when the defects are visible).

The disadvantage described above led the Applicant to seek a solution to this problem. The Applicant opted to study how to optimise prior art methods and apparatuses for making containers, the aim being to succeed in applying film on supporting skeletons while avoiding or minimising the risk of creating defects due to nonoptimal adherence between the film and the supporting skeleton. In particular, the Applicant focused on studying how to optimise prior art thermoforming methods and thermoforming apparatuses currently used for that purpose.

In more detail, the study on how to optimise prior art thermoforming methods and thermoforming apparatuses aims to succeed in thermoforming a thermoformable film, on a supporting skeleton, in a more high-performance way than that achieved with the prior art thermoforming methods and thermoforming apparatuses, for example with thermoformable films whose thickness is less than in the prior art.

In this context the technical purpose which forms the basis of this invention is to make an apparatus and define a method for making a container comprising a supporting skeleton and a film coupled to the supporting skeleton, which at least partly overcome the above-mentioned disadvantages.

In particular the technical purpose of this invention is to make an apparatus and define a method for making a container comprising a supporting skeleton and a film coupled to the supporting skeleton, which allow a container to be obtained with quality similar to those currently produced.

The technical purpose and the aims indicated are substantially achieved by an apparatus, by a method for making a container comprising a supporting skeleton and a film coupled to the supporting skeleton and by the container made in this way, as set out in the appended independent claims.

Particular embodiments of this invention are defined in the corresponding dependent claims.

Further features and the advantages of this invention will be more apparent in the detailed description of several preferred, non-limiting embodiments of an apparatus and of a method for making a container comprising a supporting skeleton and a film coupled to the supporting skeleton and of the related container according to this invention, which are illustrated in the accompanying drawings, in which:
- Figure 1 is a schematic top view of a first embodiment of an apparatus according to this invention;
- Figure 2 is a schematic top view of a second embodiment of an apparatus according to this invention;
- Figure 3 is a side view of a part of the apparatus of Figure 1;
- Figure 4 is a side view of a part of the apparatus of Figure 2;
- Figure 5 is an enlarged vertical section of the detail V of the container of Figure 3;
- Figure 6 is a schematic illustration of an expected image of a container which is free of defects seen from above;
- Figure 7 is a schematic illustration of a top view image of a defective container acquired by a checking device which is part of an apparatus according to a this invention;
- Figure 8 is a schematic side view of a checking device which is part of an apparatus made according to this invention; and
- Figure 9 is a schematic top view of the checking device of Figure 8.

The following is a description first of the method for making a container 2 comprising a supporting skeleton 3 and a film coupled to the supporting skeleton 3, followed by a description of the apparatus for making the container 2.

It must be emphasised that the supporting skeleton 3 may be made of any material. In particular, the supporting skeleton 3 may be constituted of materials comprising, in general, cellulose and/or vegetable fibres. For example, the supporting skeleton 3 may be constituted of cardboard and/or of cellulose moulded fibre. In some embodiments, the supporting skeleton 3 may be constituted of a paper and cardboard industry article, that is to say, a cellulose material-based article (such as paper or paperboard). For example, it may be constituted of a single sheet, folded and/or shaped and/or glued on itself, or of two or more sheets which are folded and/or shaped and/or glued or constrained to each other).

In other embodiments, the supporting skeleton 3 may be constituted of different materials, for example of a plastic material-based article or of a metal material-based article (such as aluminium). Supporting skeletons 3 constituted of an article based on multiple different materials (such as, for example, cellulose material and plastic material) are also possible.

Moreover, this invention is not limited either by the type of supporting skeleton 3, since it may be transparent, coloured, moulded, with text, etc., or by the shape of the supporting skeleton 3, since it may be flat, tub-shaped, etc. For example, the supporting skeleton 3 may be flat (that is to say, the supporting skeleton 3 extends substantially in a lying plane) and in this case the film may be glued to the supporting skeleton 3; or the supporting skeleton 3 may be substantially bowl-shaped (that is to say, the supporting skeleton 3 has a concavity in which the product can be received and housed) and the film can be thermoformed and simultaneously glued on the supporting skeleton 3.

In any case, the features of the supporting skeleton 3 are not important or limiting for this invention; the skeleton may be of any type and an expert in the sector will be capable on each occasion of selecting the material, the type and shape of the supporting skeleton 3 suitable for his or her own needs. Moreover, even the film, whether thermoformable or not, may comprise different types of material. For example, the thermoformable film 4 may comprise, or may be constituted of, a fossil-based plastic material or a bio-based plastic material.

It should be emphasised that in the following description reference will mainly be made to the preferred embodiment shown in the figures, in which the apparatus is constituted of a thermoforming apparatus 1 and the film is constituted of a thermoformable film 4. In particular, the thermoforming apparatus 1 is an apparatus for making a container 2 by thermoforming the thermoformable film 4 on the supporting skeleton 3. However, what is described must be considered applicable, with the required adaptations, even to non-thermoforming apparatuses and for the use of non-thermoformable film.

The main innovative aspect of this invention consists of having introduced a check of the quality of the containers 2 made. This check is based, on one hand, on the insertion of an indicator into a first layer 5 of plastic material of the thermoformable film 4 (with the thermoformable film 4 being thermoformed on the supporting skeleton 3 to make the container 2), and on the other hand, on the check relating to the presence of the indicator in the container 2 made. In the context of this invention, the definition "indicator" means a substance inserted into the composition of the layer of thermoformable film 4, preferably evenly distributed in it, which emits electromagnetic radiation in an expected response band when it is excited with electromagnetic radiation in a predetermined excitation band.

In particular, in some embodiments the indicator is a substance directly inserted into the composition of the layer of the thermoformable film 4.

In contrast, in other embodiments, the indicator is constituted of a substance which is produced during the thermoformable film 4 production process, as a result of the chemical modification of other molecules. For example, it is possible that the indicator is produced as a result of the breakdown of more complex molecules during the cross-linking process of the material of which the film is constituted. It is therefore possible for example to insert into the material intended to form the first layer 5, specific molecules which during the cross-linking process break down into fluorescent or phosphorescent molecules.

In more detail, the indicator is inserted into a first layer 5 of plastic material of the thermoformable film 4 and, since the container 2 is obtained by thermoforming this thermoformable film 4 on the supporting skeleton 3, even the container 2 comprises the first layer 5 of plastic material with the indicator. In fact, the container 2 comprises the same layers 7 of which the thermoformable film 4 is constituted. The only difference is that the thermoforming causes stretching of the thermoformable film 4 and, consequently, in the container 2, the first layer 5 of plastic material has, at least locally, a thickness which is less than that which it had in the thermoformable film 4.

Hereinafter, the term first layer 5 will be used both with regard to the thermoformable film 4, and with regard to the container 2 obtained by thermoforming the thermoformable film 4 on the supporting skeleton 3.

Moreover, in this entire description and in the appended claims, the term thermoformable film 4 is used both to indicate the thermoformable film 4 before it is thermoformed on the supporting skeleton 3, and to indicate the thermoformable film 4 which has been thermoformed on the supporting skeleton 3 to make the container 2 (and is therefore, together with the supporting skeleton 3, a part of the container 2 made). However, when referring to the thermoformable film 4 after thermoforming (the latter case), generally it will be specified that it is coupled to the supporting skeleton 3.

In the practical implementation of this invention, the indicator inserted into the first layer 5 is excited with electromagnetic radiation in the predetermined excitation band and electromagnetic radiation emitted by the indicator in the expected response band is detected. By analysing this electromagnetic radiation detected, it is possible to determine if the container 2 made has defects 6 (and is therefore a defective container 2 and to be rejected) or does not have detects 6 (and is therefore a container 2 which is suitable and usable). In particular, the defects 6 of interest are those linked to coupling between the thermoformable film 4 and the supporting skeleton 3 and, in more detail, to the adherence between the thermoformable film 4 and the supporting skeleton 3 in the container 2 made by the thermoforming.

In preferred applications, in particular, the first layer 5 of plastic material containing the indicator is the barrier layer, that is to say, the layer suitable for constituting a barrier to oxygen. According to this invention, advantageously, in this case the thickness of the first layer 5 is between 0.5 µm and 10 µm, preferably less than or equal to 5 µm, even more preferably between 2 µm and 3 µm. For example, the first layer 5 of plastic material comprises, and preferably is constituted of, EVOH.

However, in other embodiments, the thermoformable film 4 may comprise a different type of barrier layer, for example which comprises or which is constituted of a AlOx coating.

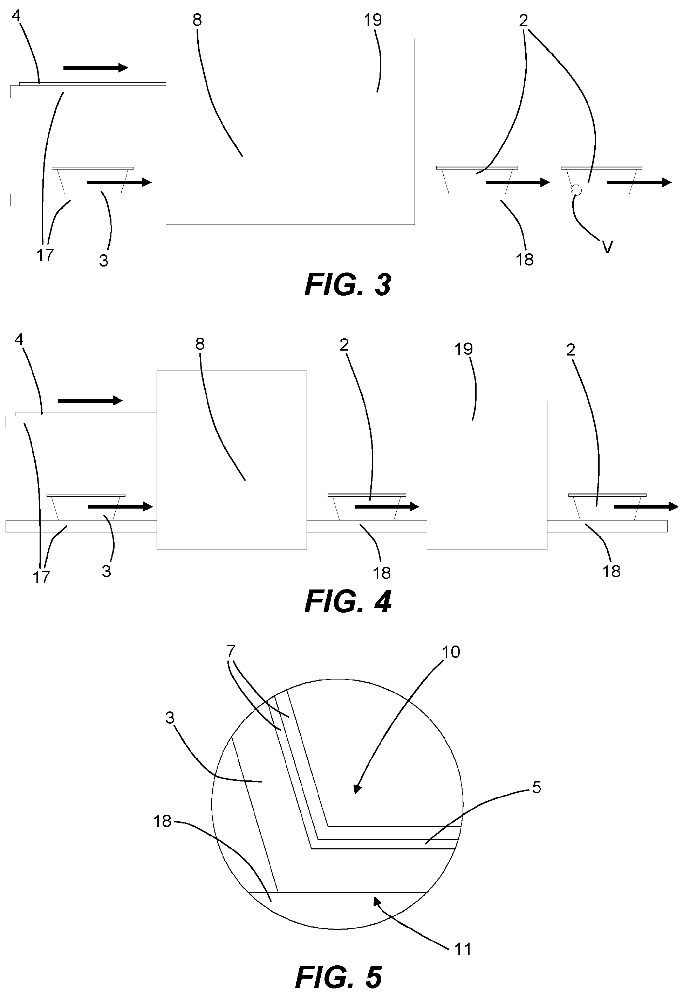

Further embodiments are also possible, for example in which the thermoformable film 4 is obtained by coupling two or more co-extruded films. This invention may be applied both in containers 2 in which the thermoformable film 4 coupled to the supporting skeleton 3 comprises a plurality of layers 7 (as shown in Figure 5), and in containers 2 in which the thermoformable film 4 coupled to the supporting skeleton 3 is constituted of a single layer.

In this latter case, the single layer corresponds to the first layer 5 containing the indicator.

In the applications in which, in the containers 2, the thermoformable film 4 coupled to the supporting skeleton 3 comprises the plurality of layers 7, based on requirements it is possible to insert an indicator both into a single layer (for example the barrier layer) and into multiple layers 7 (therefore, in addition to the first layer 5 of plastic material, at least one other layer which comprises the indicator will be present). In this latter case, the indicator may be the same in all of the layers 7 affected, or it may be the case that different indicators are inserted into different layers 7 (in these solutions, in addition to the first layer 5 of plastic material, at least one other layer which comprises an indicator will be present). The term different indicators means indicators or substances which emit electromagnetic radiation in different expected response bands when they are excited with electromagnetic radiation in a same predetermined excitation band, or substances which emit electromagnetic radiation in the same expected response band when they are excited with electromagnetic radiation in different excitation bands, or substances which each have their own pair of expected response and predetermined excitation bands.

Depending on application requirements, an expert in the sector will be capable of selecting both the number and the types of indicators to be inserted.

For example, it is possible to insert different indicators in different layers 7 to perform a check on the detection of a defect 6 of the container 2 with regard to adherence between the thermoformable film 4 and the supporting skeleton 3. In fact, if a defect 6 of the container 2 of this type is detected by analysing the electromagnetic radiation emitted by one of the indicators, it is possible to check if that defect 6 of the container 2 is also detected by analysing the electromagnetic radiation emitted by the indicators inserted into the other layers 7.

For the sake of simplicity, hereinafter particular attention will be paid to the case in which the indicator is present in a single first layer 5. Everything can be suitably adapted by an expert in the sector if there are multiple layers 7 present into which the same indicator is inserted (or into which different indicators are inserted).

Advantageously, the first layer 5 of plastic material in which the indicator is present extends for the entire extent of the thermoformable film 4 coupled to the supporting skeleton 3 in the container 2. In other embodiments, in which a check is to be performed only in some zones of the container 2, the first layer 5 of plastic material in which the indicator is present may also extend only for a part of the entire extent of the thermoformable film 4 coupled to the supporting skeleton 3 in the container 2 (at least in the zones in which the check is performed). In the preferred embodiments, the indicator is a substance distributed inside the first layer 5 of plastic material in such a way that the entire layer contains the indicator. Advantageously, the indicator is evenly distributed inside the first layer 5 of plastic material. However, if appropriate, and based on application requirements, it is also possible that the indicator is not evenly distributed in the first layer 5 of plastic material; for example, the indicator may be present with higher concentrations in some portions of the first layer 5 of plastic material of the container 2 and with lower concentrations in others portions of the first layer 5 of plastic material of the container 2.

In the preferred embodiments, in the containers 2 the thermoformable film 4 is coupled to the supporting skeleton 3 for the entire extent of the supporting skeleton 3, in such a way that across its thickness the container 2 has one layer defined by the thermoformable film 4 and at least one layer defined by the supporting skeleton 3. In any case, alternative embodiments are possible, in which the thermoformable film 4 is coupled to the supporting skeleton 3 only at some portions of the entire extent of the supporting skeleton 3. In this case, the container 2 has portions in which the thermoformable film 4 is present, but the supporting skeleton 3 is not present, or portions in which the supporting skeleton 3 is present, but the thermoformable film 4 coupled to the supporting skeleton 3 is not present, or portions in which the thermoformable film 4 is deliberately detached from the supporting skeleton 3.

What will now be described in detail is the method for making a container 2 comprising a supporting skeleton 3 and a film coupled to the supporting skeleton 3.

First, that method comprises a feeding step, in which the film and the supporting skeleton 3 are fed to a coupling device. The film comprises at least the first layer 5 of plastic material in which the indicator previously described is distributed.

Second, the method comprises a coupling step followed by a checking step. In the coupling step, the film is coupled to the supporting skeleton 3 by means of the coupling device, to obtain the container 2 by making the film adhere to the supporting skeleton 3; in this way the container 2 which comprises the first layer 5 of plastic material is obtained.

In the preferred embodiment, the film is constituted of a thermoformable film 4, and the coupling device is constituted of a thermoforming device 8. The coupling step is a thermoforming step in which the thermoformable film 4 is thermoformed on the supporting skeleton 3 by means of the thermoforming device 8. In the following description, reference will in general be made to this embodiment, which is also the embodiment shown in the figures.

In contrast, the checking step in turn comprises an emitting sub-step in which electromagnetic radiation is emitted in the predetermined excitation band towards the container 2, and a simultaneous receiving sub-step in which there is detection of the electromagnetic radiation in the expected response band, emitted by the first layer 5 of plastic material of the container 2 as a result of the excitation due to the electromagnetic radiation in the predetermined excitation band.

In the preferred embodiments, during the emitting sub-step the electromagnetic radiation in the predetermined excitation band is emitted towards the container 2 on the side of the container 2 on which the thermoformable film 4 is present (and not the supporting skeleton 3), so that during the simultaneous receiving sub-step the electromagnetic radiation in the expected response band is detected on the side of the container 2 on which the thermoformable film 4 is present (and not the supporting skeleton 3).

However, alternative embodiments are possible, in which the supporting skeleton 3 is at least partly transparent both to the electromagnetic radiation in the predetermined excitation band and to the electromagnetic radiation in the expected response band. In this case the emitting and receiving sub-steps may even be performed on the side on which the supporting skeleton 3 is present.

Then the checking step comprises an examining sub-step in which information about the electromagnetic radiation detected in the expected response band is examined, to detect the presence or absence of defects 6 of the container 2, with regard to adherence between the thermoformable film 4 and the supporting skeleton 3. In the context of this invention, the term "defects" 6 of the container 2, means the presence of one or more zones of the container 2 in which adherence between the thermoformable film 4 and the supporting skeleton 3 is not as desired. In particular, the defect 6 may be due to non-adherence between the thermoformable film 4 and the supporting skeleton 3 in zones of the container 2 in which that adherence is required. If zones of the container 2 in which the thermoformable film 4 does not adhere to the supporting skeleton 3 are present, but in those zones of the container 2 adherence between the thermoformable film 4 and the supporting skeleton 3 is not required, that shall not be considered a defect 6 in accordance with this invention. In contrast, if in those zones the thermoformable film 4 adheres to the supporting skeleton 3 that shall be considered a defect.

Examples of possible defects 6 are, for example, bubbles and erroneous adherence of the thermoformable film 4 to the supporting skeleton 3 due to nonoptimal adherence of the thermoformable film 4 to the supporting skeleton 3 during the thermoforming step. Other possible defects 6 due to nonoptimal adherence of the thermoformable film 4 to the supporting skeleton 3 may be, for example, folds in the thermoformable film 4, scratches and zones in which the thermoformable film 4 is not present.

In the context of this description the containers 2 which have defects 6 are referred to as defective containers 2, whilst the containers 2 which do not have defects 6 are referred to as suitable containers 2.

If, in the container 2, the thermoformable film 4 coupled to the supporting skeleton 3 comprises the plurality of layers 7, with different indicators inserted into different layers 7, the checking step is more structured. In particular, if this thermoformable film 4 of the container 2 comprises a plurality of layers 7 of plastic material (X layers 7) inside each of which a different indicator is inserted, then X emitting sub-steps and X receiving sub-steps must be carried out, with each of the receiving sub-steps being carried out simultaneously with the respective emitting sub-step. Depending on how the different bands have been selected, the different emitting sub-steps and the different receiving sub-steps may be carried out one after another or at least partly simultaneously. If, in contrast, the thermoformable film 4 of the container 2 comprises a group of layers 7 of plastic material into which there has been inserted the same indicator or different indicators which emit electromagnetic radiation in the same expected response band as a result of the excitation due to the electromagnetic radiation in the same predetermined excitation band, it is possible to carry out a smaller number of emitting sub-steps (and of respective receiving sub-steps): in fact, for each group of layers 7 of plastic material, it is possible to perform a single emitting sub-step (and the receiving sub-step).

In general, when the thermoformable film 4 of the container 2 comprises a plurality of layers 7 of plastic material, it is necessary that any layers 7 of plastic material which are placed, relative to the first layer 5 of plastic material with the indicator, on the side of the container 2 on which the emitting sub-step and the respective receiving sub-step are performed, are at least partly transparent both to the electromagnetic radiation in the predetermined excitation band, and to the electromagnetic radiation in the expected response band. In this way at least part of the electromagnetic radiation emitted reaches the first layer 5 of plastic material, and at least part of the electromagnetic radiation consequently emitted by the first layer 5 of plastic material can be detected.

According to one embodiment of the method, the receiving sub-step is carried out by acquiring at least one image of the container 2 (hereinafter referred to as the acquired image 9), and the information about the electromagnetic radiation in the expected response band used in the examining sub-step is constituted of the at least one acquired image 9.

In some embodiments, acquisition of the acquired image 9 is performed from a position which allows the obtainment of an image representative of the entire extent of the first layer 5 of plastic material. For example, it is possible that the acquisition is performed from above the container 2 from a position and from a distance which are such that the acquired image 9 is representative of the entire container 2. In other words, considering that in a container 2 two main surface can be identified, an inner surface 10 (that of the side configured to receive the product, which is usually defined by the thermoformable film 4) and an outer surface 11 (that of the opposite side, which is usually defined by the supporting skeleton 3), the acquired image 9 may correspond to an image of the entire inner surface 10. In alternative embodiments, in which the supporting skeleton 3 is transparent as previously described, the acquisition may alternatively be performed from below.

However, it is possible that the inner surface 10 is defined by the supporting skeleton 3 and the outer surface 11 is defined by the thermoformable film 4. In these cases the acquired image 9 may correspond to an image of the entire outer surface 11. In other embodiments of this type, in which the supporting skeleton 3 is transparent as previously described, the acquisition may alternatively be performed from above.

In some further embodiments, both the inner surface 10 and the outer surface 11 are defined by a thermoformable film 4, with the supporting skeleton 3 interposed between the thermoformable film 4 which defines the inner surface 10 and the thermoformable film 4 which defines the outer surface 11. In this case, the checking step may relate to only the thermoformable film 4 which defines the inner surface 10, or only the thermoformable film 4 which defines the outer surface 11, or both.

Advantageously, the acquisition is performed at the centre of the container 2, perpendicularly to it (that is to say, that an optical axis of a system used for the acquisition is perpendicular to a lying plane of the container 2 at its centre).

Moreover, the observation line 23 is selected in such a way that no hidden parts of the first layer 5 are present and in such a way that no portion of the container 2 (for example its lateral walls 12) has an inclination which is too small relative to the position from which the receiving sub-step is performed

(in fact, theoretically, the best acquisition could be obtained by observing each point of the first layer 5 perpendicularly to the first layer 5 itself at that point). In fact, otherwise, the acquired image 9 could show the first layer 5 in a nonoptimal way.

In contrast, in other embodiments, the acquisition of the acquired image 9 may be performed in pieces which are then combined. In particular, it may be performed in such a way as to gradually obtain images each showing a portion of the first layer 5 of plastic material of the container 2. In this case, images of all of the portions of the first layer 5 of plastic material of the container 2 are acquired in sequence (it is possible that the images of the portions are images of portions of the first layer 5 of plastic material of the container 2 slightly overlapping each other - in the preferred case - or images of portions of the first layer 5 of plastic material of the container 2 which are adjacent to each other). During the examining sub-step, the acquired image 9 of the first layer 5 of plastic material of the entire container 2 is obtained by processing and combining the various images, acquired in sequence, of the portions of the first layer 5 of plastic material of the container 2, for example using normal image reconstruction algorithms.

In some embodiments, the emitting sub-step and the receiving sub-step may be performed inside a space which is protected (preferably completely, but at least partly) from possible interference due to external sources of electromagnetic radiation, such as light sources. That protected space may be created for performing the emitting and receiving sub-steps inside a chamber shielded from external light radiation. That is advantageous because it allows a reduction in the probability that such interference might alter the detection of the electromagnetic radiation in the expected response band emitted by the first layer 5 of plastic material of the container 2 during the receiving sub-step.

In the examining sub-step the presence or absence of any defects 6 of the container 2, is determined by means of a processing of the acquired image 9.

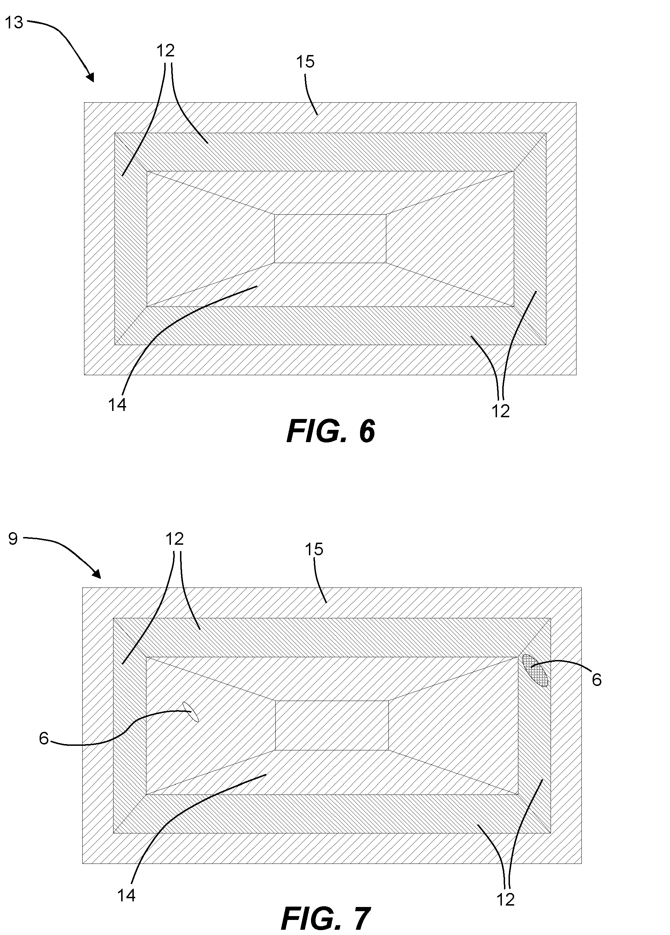

In some embodiments, during the examining sub-step the acquired image 9 is processed by means of at least one image processing algorithm based on a comparison between the acquired image 9 (shown, for example, in Figure 7 - an image in which several defects 6 are present) and an expected image 13 of the container 2 which shows a container 2 free of defects 6 (shown, for example, in Figure 6). In other words, the expected image 13 corresponds to the image which could be acquired whenever the container 2 being examined is free of defects 6. The expected image 13 saved is in fact an image which shows a container 2 which is free of defects 6.

Preferably, the expected image 13 corresponds to a container 2 in which, in the different zones of the container 2, adherence between the thermoformable film 4 and the supporting skeleton 3 has a known extent, advantageously an optimum trend previously determined. That corresponds to the fact that the first layer 5 also has a known extent. In fact, if the thermoformable film 4 is correctly adhering to the supporting skeleton 3, its first layer 5 extends based on the mechanical constraints caused by the adherence itself. Since the indicator is advantageously distributed in a known way in the material of the first layer 5 of the thermoformable film 4, a predetermined extent of the first layer 5 in the container 2 corresponds to a known distribution of the indicator in the first layer 5 of the thermoformable film 4 coupled to the supporting skeleton 3. Moreover, whether or not the thermoformable film 4 adheres to the supporting skeleton 3 causes a different curvature of the surface of the first layer 5 and, therefore, a different inclination between it and the observation line 23 which may cause a different optical behaviour of the first layer 5 itself (for example different types of diffraction and reflection phenomena).

Both the acquired image 9, and the expected image 13 have at each point (pixel) an intensity of the electromagnetic radiation (in the expected response band) which depends on the total quantity of indicator present in the portion of the first layer 5 to which that point (pixel) of the image corresponds and on the inclination of the surface of the first layer 5 relative to the observation line 23. The thickness being equal, a different inclination of the first layer 5 of plastic material corresponds to a different intensity of the electromagnetic radiation detectable in the expected response band.

Moreover, if defects 6 are present with regard to adherence between the thermoformable film 4 and the supporting skeleton 3, the first layer 5 of plastic material may have a thickness which is less than expected (for example if the thermoformable film 4 is locally stretched and forms a raised bubble). The intensity of the electromagnetic radiation in the expected response band may, therefore, also depend on the thickness. More precisely, the thickness to be considered is not the thickness of the first layer 5 measured perpendicularly to its extent, but the thickness of the first layer 5 measured along the line of propagation of the electromagnetic radiation which each pixel of the image generates. Therefore, the thickness being equal, a portion observed along a line which forms an angle α (for example equal to 60°) relative to the perpendicular, has an apparent thickness equal to the real thickness divided by cos α (in the example, a double thickness).

Consequently, in the expected image 13, even if the indicator is constantly distributed in the portions of the first layer 5 of plastic material present on the bottom wall 14, on the lateral walls 12 and on the flange 15 of the container 2, the intensities of the electromagnetic radiation in the expected response band may be very different between the portions which are flat and perpendicular or almost perpendicular to the optical axis, and those inclined relative to the perpendicular, with intensities which depend on their inclination.

If the observation point is far away enough from the container 2 and is placed along an axis perpendicular to the lying plane of the container 2 passing at the centre of the container 2 itself, the angle formed by the observation line 23 relative to the perpendicular is small and the apparent thickness is practically equal to the real thickness. The image which is obtained is therefore similar to that schematically illustrated in Figure 6, with the highest intensity at the inclined lateral walls 12.

Similar assessments apply for the acquired image 9 for which, however, the trend of the thickness of the first layer 5 of plastic material of the container 2 is unknown. Moreover, the acquired image 9 may relate to a container 2 which has defects 6 and may therefore have zones with intensity different from those expected.

Possible defects 6 are for example, as already indicated, bubbles between the thermoformable film 4 and the supporting skeleton 3: at these defects 6, in the acquired image 9 we notice an intensity of the electromagnetic radiation received in the expected response band, different from that of the expected image 13; that is due both to a different inclination of the first layer 5 of plastic material relative to the expected inclination and to a variation in the thickness of the first layer 5 of plastic material relative to the expected thickness.

In order to be able to perform the comparison, the acquired image 9 and the expected image 13 are advantageously acquired from a same viewpoint relative to the container 2, or are resized and/or cut in such a way that the containers 2 visible in them have the same dimensions and the same position, as if they had been acquired from that same viewpoint.

The image processing algorithm may be based on a comparison between the intensities of the images. That comparison may be performed on the entire image, but preferably it is performed either by comparing the intensities of corresponding individual pixels (which have the same position relative to the image) or by comparing zones of the image with each other, for example constituted of groups of adjacent pixels.

According to one possible algorithm during the examining sub-step the following steps are carried out: the images are divided into zones (for example they are divided based on the pixels) and the various zones of the images are associated with each other in such a way that each zone of the acquired image 9 corresponds to the respective zone of the expected image 13; both the intensity of the zones of the acquired image 9 and the intensity of the zones of the expected image 13 are assessed; a difference between the intensity of the zones of the acquired image 9 and that of the respective zones of the expected image 13 is calculated; the absolute value of the difference obtained is compared with a maximum permitted difference, which is substantially a predetermined maximum threshold. The container 2 is considered defective if the difference in the intensity of one zone - or multiple zones - is greater than the maximum permitted difference, whilst it is considered suitable if the difference in the intensity of all of the zones is less than the maximum permitted difference. In fact, exceeding the maximum permitted difference is considered indicative of the presence of a defect 6.

In some applications supplied as output is a first signal for indicating a defective container 2 or a second signal for indicating a suitable container 2. The algorithm described is just one example of the possible algorithms based on the comparison between the acquired image 9 and the expected image 13 which can be used. Therefore, algorithms are possible which are based on different types of comparison and/or which have different steps. Therefore, the algorithm used shall not be understood as limiting for this invention.

According to some embodiments, during the checking step the acquired image 9 is processed by means of an algorithm based on artificial intelligence, in particular advantageously selected from a group comprising: algorithms based on supervised learning techniques, algorithms based on unsupervised learning techniques, algorithms based on reinforcement learning techniques. Examples of algorithms based on artificial intelligence which can be used are: neural networks (such as feed-forward neural networks, CNN convolutional neural networks, U-Net convolutional neural networks, BN Bayesian networks, RNN recurrent neural networks), linear regression, logistic regression, GAN generative adversarial networks, cycleGAN, VAE-GAN, Bayesian classifiers, SVM support vector machines and algorithms derived from them (such as SVC, structured SVM, transductive SVM and multiclass SVM), K-nearest neighbors k-NN, random forest, Q-learning, Trust Region Policy Optimization TRPO, Proximal Policy Optimization PPO, Deep Q Neural Networks DQNN.

If during the checking step the acquired image 9 is processed by means of an algorithm based on artificial intelligence, before using the algorithm it is necessary to carry out a training step to set the algorithm itself. During the training step data is supplied to the algorithm, which may be input data and output data, and if necessary other data such as intermediate data.

In the training step the following sub-steps: can be performed, in the order indicated:
- a data generating sub-step, in which samples are created both for the training, and for the algorithm test (used in the following sub-steps); in particular, the data is images of defective containers 2 and images of suitable containers 2;
- a training sub-step, in which the algorithm is trained using the samples for training created in the data generating sub-step; in this sub-step the images of the defective containers 2 and of the suitable containers 2 are subjected to the algorithm advantageously together with the expected output for each of them (suitable or defective container 2); and
- a verifying sub-step, in which the effectiveness of the algorithm is verified using the samples for the test created in the data generating sub-step; in this sub-step the algorithm outputs are compared with the known outputs which are expected to be received.

Aspects strictly linked to algorithms based on artificial intelligence and to learning techniques for those algorithms (methods on which the techniques are based, differences between various techniques, etc.) are however aspects which are themselves known to a person expert in the sector and will not be described in further detail. Moreover, an expert in the sector is capable of adapting what has been described to the various types of algorithms based on artificial intelligence.

It should be emphasised that during the examining sub-step it is possible that the acquired image 9 is processed by means of the image processing algorithm based on the comparison between the acquired image 9 and the expected image 13 or that the acquired image 9 is processed by means of the algorithm based on artificial intelligence. It is also possible that the two types of processing described are combined with each other: the acquired image 9 may be processed both by means of the image processing algorithm based on the comparison between the acquired image 9 and the expected image 13, and by means of the algorithm based on artificial intelligence (in this order or in the reverse order).

In some preferred embodiments, during the emitting sub-step electromagnetic radiation is emitted in a predetermined excitation band which comprises the ultraviolet band. In some cases, the predetermined excitation band is constituted of the ultraviolet band. In these embodiments, the indicator is a fluorescent-based substance and may comprise at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-l,3- benzoxazole).

In other embodiments, it is possible that the indicator is a phosphorescent-based substance; in this case, in contrast, during the emitting sub-step electromagnetic radiation may be emitted in a predetermined excitation band which comprises a band different from that of ultraviolet, such as the infra-red band.

In the preferred embodiments, the first layer 5 of plastic material emits electromagnetic radiation in an expected response band which comprises the visible band. However, in other embodiments the first layer 5 of plastic material may emit electromagnetic radiation in an expected response band which comprises a different band, such as the ultraviolet band or the infra-red band.

In some embodiments, the method comprises a step of monitoring performance of the method itself, in which data about the production of defective containers 2 is saved and examined, such as data about the quality of the container 2 (that is to say, about the presence or absence of defects 6 identified in the container 2). In particular, during the monitoring step the data about the quality of the containers 2 determined in the examining sub-step is saved and examined. That is also applicable to a group of containers 2: each time the checking step is performed the data about the quality of the container 2 is saved. Therefore, during successive monitoring steps, the data about the quality of a group of containers 2 made is saved and examined. In more detail, the phrase "data about the quality of the container 2" means data relating to the presence (or absence) of defects 6 of the container 2, such as the number of defects 6, the type of defects 6 and the position of these defects 6.

In some embodiments this data is used to process statistics about operation of the coupling device, preferably of the thermoforming device 8.

In some embodiments, the method comprises an optimising step during which the data saved about the quality of a group of containers 2 made by the thermoforming device 8, saved during successive checking steps and examined during the monitoring step, is processed to identify any problems of the coupling step and/or to vary operating parameters of the coupling device. In particular, during the monitoring step, the data is processed to identify any problems of the thermoforming step and/or to vary operating parameters of the thermoforming device 8.

Essentially, for each container 2 made belonging to the group of containers 2 (which may comprise more or less containers 2 or even all of the containers 2 gradually made), the checking step is performed and the data about the quality of the container 2 is saved. The group of containers 2 may also be a dynamic set which contains the last N containers 2 made (for example the last one hundred or one thousand containers 2).

After the checking and monitoring steps have been carried out (on a group of containers 2 or periodically), the optimising step is performed. During this step, the data saved during the monitoring step is processed. Based on the results of this processing, any problems are identified and it is possible to vary the operating parameters of the thermoforming device 8 to solve those problems.

The processing of the data saved may comprise determining the incidence of a particular problem or a problem in a predetermined point of the container 2. For example, a group of X containers 2 is considered for each of which the checking step is performed and during the monitoring step the data about quality is saved. Then the optimising step is performed, in which this data is processed, and an assessment is made to determine if there is a percentage of the containers 2 made which is higher than a predetermined warning threshold, which has the same defect 6 in roughly the same position (for example a bubble at the bottom wall 14). If so, during the optimising step the operating parameters of the thermoforming device 8 are varied, advantageously automatically (by means of a dedicated software); for example, since a bubble is generally caused by nonoptimal adherence of the thermoformable film 4 to the supporting skeleton 3, the temperature may be varied by a predetermined value (for example 1°C), either for the entire thermoforming device 8, or for the part nearest to the defect 6, to optimise the thermoforming and to thereby reduce the number of defective containers 2. Depending on the embodiments, the features of the thermoforming device 8 and the type of problem encountered, a person expert in the sector will know how to set the most appropriate type of correction of the operating parameters of the thermoforming device 8.

After each variation of the operating parameters of the thermoforming device 8, the thermoforming method is implemented again once or a plurality of times and monitoring of the quality of the containers 2 advantageously continues; therefore, the steps described above are carried out again, and there is a new assessment to determine if there is a percentage of containers 2 for which the same defect 6 was detected which is higher than the predetermined threshold. If not, the percentage of defective containers 2 is considered to be acceptable and it is possible to keep these operating parameters of the thermoforming device 8; in contrast, if the predetermined threshold was exceeded again, the percentage of defective containers 2 is not acceptable and it is therefore possible to again vary the operating parameters of the thermoforming device 8 (for example again modifying the temperature or other parameters such as the air pressure or the speed with which the pressure varies). This is then advantageously repeated, keeping production of the containers 2 monitored.

The example described relates to a case in which the same defect 6 is present in a same position for all of the defective containers 2. However, what was described may be applicable if different defects 6 are present in a same position for all of the defective containers 2, and if the same defect 6 is present in different positions for the defective containers 2, and if there are different defects 6 in different positions for the defective containers 2.

Advantageously, the optimising step (and the resulting repetitive process) may be carried out during the setting up of the thermoforming apparatus 1. That allows the thermoforming process to be optimised directly during the installation step.

However, it may also be useful to perform the optimising step either periodically (depending on the number of containers 2 made) or as a result of reaching a threshold value for the total number of defective containers 2 identified (assessment of whether the threshold has been reached may be performed by simply counting the number of containers 2 rejected in a predetermined period of time and comparing it with a maximum acceptable value, which is the threshold value), or continuously during performance of the thermoforming method.

In some embodiments, the method also comprises an unloading step, in which the thermoformed containers 2 are mechanically moved towards an outfeed station 16; in these embodiments, the checking step is advantageously carried out during the unloading step. It is possible to have both embodiments in which the checking step is carried out when the container 2 is moving towards the outfeed station 16, and embodiments in which the checking step is carried out when the container 2 is stationary. In the latter case, for example, upstream of the outfeed station 16 the container 2 is stopped to perform the checking step.

In some embodiments, the method also comprises a rejecting step, which is performed after the checking step. During the rejecting step the containers 2 for which, during the checking step, at least one defect 6 of the container 2 was detected (that is to say, the defective containers 2) are rejected.

As already indicated, this invention also relates to the container 2 obtainable with the method described herein, that is to say, a suitable container 2 which comprises inside it at least one first layer 5 equipped with the indicator.

The following is a description of the apparatus according to this invention, which allows a container 2 to be made comprising a supporting skeleton 3 and a film coupled to the supporting skeleton 3 by means of coupling of the film to the supporting skeleton 3. The container 2 has already been described in detail and will not be described further below.

First the apparatus comprises a coupling device which is configured to couple the film to the supporting skeleton 3 and to make the film adhere to the supporting skeleton 3. In particular, in the preferred embodiments the apparatus is a thermoforming apparatus 1, and the film is constituted of the thermoformable film 4 previously described. The coupling device is constituted of a thermoforming device 8.

Therefore, essentially, in the preferred embodiments the thermoforming apparatus 1 comprises a thermoforming device 8 which is configured to thermoform the thermoformable film 4 on the supporting skeleton 3 and to make the thermoformable film 4 adhere to the supporting skeleton 3.

In the following description reference will mainly be made to this embodiment, which is the embodiment shown in the figures. Despite this, what is described with regard to the thermoforming apparatus 1, or to the thermoforming device 8, shall also be understood to be applicable, with the necessary adjustments, respectively to a generic coupling apparatus and to a coupling device.

In turn the thermoforming device 8, similarly to those in the prior art, preferably comprises a shaped mould and a closing element, with the shaped mould defining a housing in which, in use, the supporting skeleton 3 is positioned before performing the thermoforming. The shaped mould and the closing element are movable, at least one relative to the other, between a home position and an operating position. When they are in the home position, the shaped mould and the closing element are uncoupled and at a distance from each other. In contrast, when they are in the operating position, the shaped mould and the closing element are coupled and near each other. In particular, in use, in the operating position the shaped mould and the closing element clamp the thermoformable film 4 between them.

Advantageously, the thermoforming device 8 also comprises one or more heating elements, which are associated with the closing element; the heating elements are configured to heat, in use, the closing element, with which they are associated.

This invention can be applied both if the thermoforming device 8 is configured to make the container 2 by thermoforming the thermoformable film 4 on the supporting skeleton 3 by means of a process for vacuum thermoforming the thermoformable film 4, and if the thermoforming device 8 is configured to make the container 2 by thermoforming the thermoformable film 4 on the supporting skeleton 3 by means of a process for thermoforming under pressure the thermoformable film 4.

In the known way, in the former case the thermoforming device 8 comprises suitable vacuum creating means, associated with the closing element, for creating a vacuum which allows the container 2 to be made by thermoforming the thermoformable film 4 on the supporting skeleton 3. In contrast, in the latter case, the thermoforming device 8 comprises suitable pneumatic means, associated with the closing element, for creating a pressure which allows the container 2 to be made by thermoforming the thermoformable film 4 on the supporting skeleton 3.

In some embodiments, the thermoforming device 8 comprises an extracting device which is associated with the shaped mould for extracting the container 2 made from the self-same shaped mould when the shaped mould and the closing element are in the home position.

In some embodiments, the extracting device is advantageously movable relative to the shaped mould between a retracted position and an extracted position. In the retracted position, the extracting device is pulled back into the shaped mould in such a way as to leave the housing free for the container 2, whilst in the extracted position the extracting device projects inside the housing; passing from the retracted position to the extracted position causes extraction of the container 2 from the shaped mould.

The aspects strictly linked to the thermoforming device 8, like all of the possible alternative embodiments, are in any case known to an expert in the sector and will not be described in further detail. For this reason, the elements previously described which are part of the thermoforming device 8, are not shown in the figures.

In any case, it must be emphasised that what has been described with regard to the thermoforming device 8 (such as, for example, the type of thermoforming by means of which the container 2 is made and the type of extracting device) shall not be understood as limiting for this invention.

The thermoforming apparatus 1 also comprises feeding means 17 and a conveyor 18, which are associated with the thermoforming device 8. In the embodiments illustrated, both the feeding means 17 and the conveyor 18 are illustrated only schematically and define a movement path. However, depending on the embodiments they may adopt various different structures (all known in themselves and known to an expert in the sector).

In particular, the feeding means 17 are associated with the thermoforming device 8 for feeding, in use, the thermoformable film 4 and the supporting skeleton 3 to the thermoforming device 8, whilst the conveyor 18 is associated with the thermoforming device 8 for receiving, in use, the container 2 made and moving it towards the outfeed station 16. The container 2 can be transferred from the thermoforming device 8 to the conveyor 18 in any way.

Moreover, the thermoforming apparatus 1 comprises a checking device 19, which is operatively associated with at least one of either the thermoforming device 8 or the conveyor 18 for detecting defects 6 of the container 2, with regard to adherence between the thermoformable film 4 and the supporting skeleton 3. In detail, saying that the checking device 19 is operatively associated with the thermoforming device 8 or with the conveyor 18 means that it is positioned in such a way as to perform the above-mentioned emitting and detecting steps on the container 2 made, while the container 2 is located, respectively in the thermoforming device 8 or on the conveyor 18.

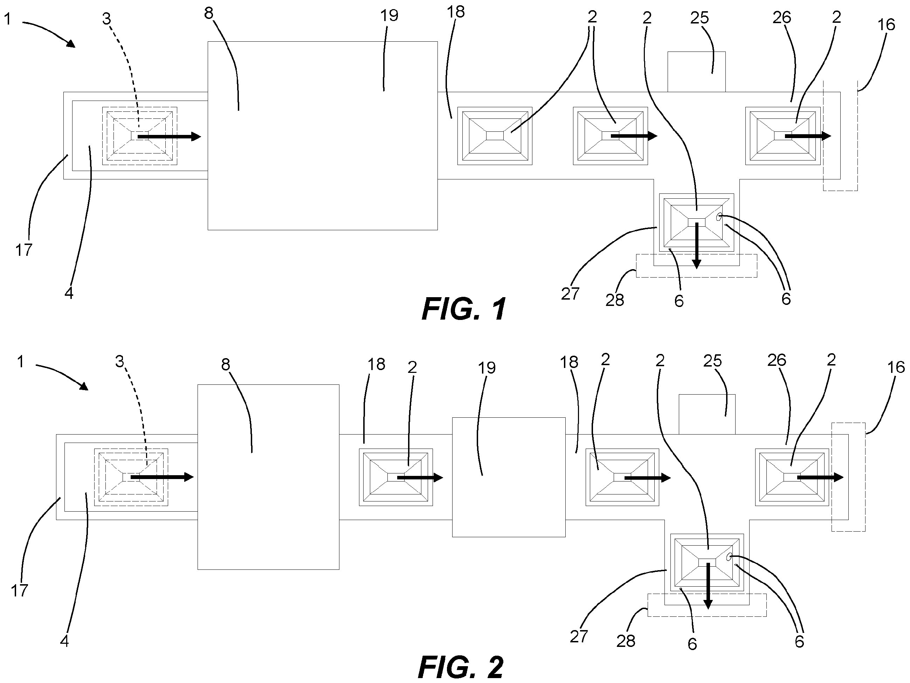

In the first embodiment, shown in Figures 1 and 3, the checking device 19 and the thermoforming device 8 are physically close and are integrated in a single component of the thermoforming apparatus 1. In this case, the checking device 19 may be placed either upstream of the thermoforming device 8 along the movement path, or downstream of the thermoforming device 8.

In the second embodiment, in contrast shown in Figures 2 and 4, the checking device 19 and the thermoforming device 8 are two separate components of the thermoforming apparatus 1. In this case, the checking device 19 is positioned downstream of the thermoforming device 8 along the movement path. In this case the checking device 19 is advantageously associated with the conveyor 18.

In turn the checking device 19 for checking the container 2 comprises an emitter 20 and a detector 21. The emitter 20 is configured to emit electromagnetic radiation in the predetermined excitation band and to direct it towards the container 2, whilst the detector 21 is configured to receive electromagnetic radiation emitted in the expected response band by the container 2, as a result of the excitation by the emitter 20.

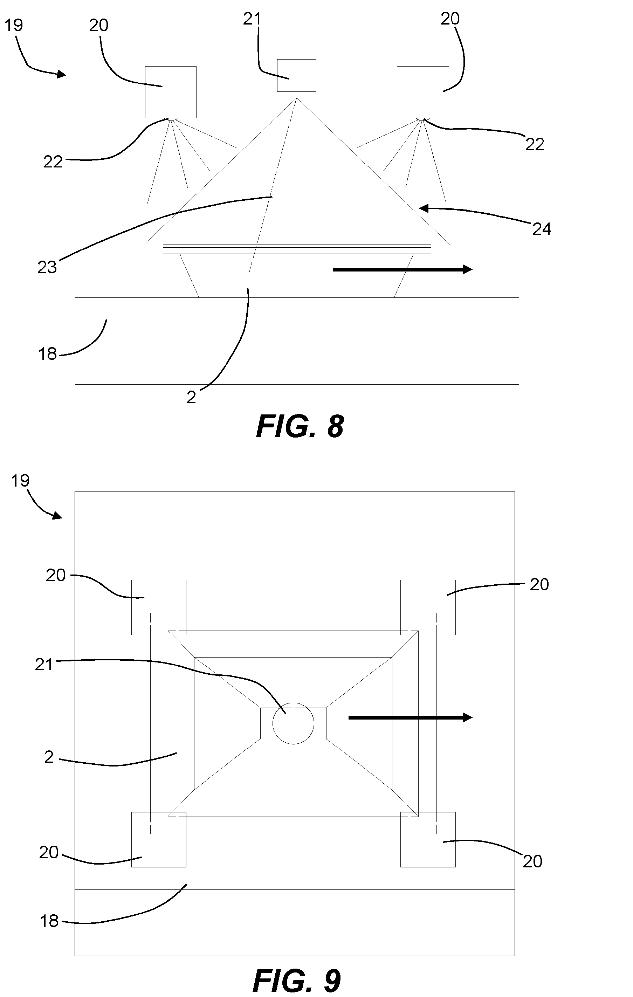

In some embodiments, such as that shown in Figures 8 and 9, in order to attempt to guarantee that the entire container 2 is irradiated evenly enough with the electromagnetic radiation there are four emitters 20 present, which are positioned substantially at the four vertices of a rectangle or of a square. A single detector 21 is placed at the centre of the rectangle or of the square, that is to say, at the point at which the diagonals of the rectangle or of the square intersect. However other embodiments are possible, for example in which a different number of emitters 20 and/or detectors 21 are present or in which the emitters 20 and/or the detector 21 are positioned differently from what is shown in the figures. Moreover, advantageously, the one or more emitters 20 and the one or more detectors 21 are positioned inside a casing which prevents, or which at least obstructs, possible interference due to external sources of electromagnetic radiation (such as for example light sources); this reduces the probability of this external interference being able to alter detection of the defects relative to the coupling between the thermoformable film 4 and the supporting skeleton 3. The casing is also configured and sized in such a way as to also contain each time, in use, the container 2 with which the one or more emitters 20 and the one or more detectors 21 interact. Several alternative embodiments are described below. Moreover, the checking device 19 comprises an electronic processing unit, which is connected to the detector 21 for receiving from it, in digital format, information about the electromagnetic radiation received by the detector 21; moreover, the electronic processing unit is programmed to determine the presence or absence of said defects 6 by means of a processing of the information received from the detector 21. The electronic processing unit may advantageously also be connected to the emitters 20 present for checking their activation. Advantageously the electronic processing unit is programmed to perform the examining sub-step and if necessary the monitoring step and the optimising step which are described above.

In the preferred embodiments, each emitter 20 advantageously comprises one or more lamps 22 (for example of the LED type) which have an emitting band which comprises the predetermined excitation band or which coincides with it, and if necessary one or more filters for selecting the predetermined excitation band.

In the preferred embodiments, the detector 21 has a plurality of observation lines 23 which come out of it. The observation lines 23 may extend parallel to each other, but preferably they diverge from each other gradually moving away from the detector 21. The expression "observation line" 23 means a line along which the detector 21 is configured to receive the electromagnetic radiation emitted in the expected response band; that means that each observation line 23 is inside the field of vision 24 of the detector 21.

The detector 21 is also positioned relative to the position in use adopted by the container 2 at the moment of the detection, in such a way that, in use, each observation line 23 intercepts the first layer 5 of plastic material of the container 2 (and advantageously, each of the layers 7 of the thermoformable film 4 of the container 2) only once. Given that the container 2, obtained by thermoforming the thermoformable film 4 on the supporting skeleton 3, has two main surfaces (an inner surface 10 and an outer surface 11), saying that each observation line 23 intercepts the first layer 5 of plastic material only once means that the detector 21 is positioned in such a way that (simultaneously or at successive moments) all of the zones of the inner surface 10 or of the outer surface 11 are visible in its field of vision 24.

In some embodiments, such as that illustrated in Figure 8 and 9, the detector 21 is configured and positioned to simultaneously receive electromagnetic radiation emitted by the entire first layer 5 of plastic material of the container 2. That means that the field of vision 24 of the detector 21 has an amplitude such that the detector 21 succeeds in simultaneously observing the entire container 2 made (more specifically, the entire inner surface 10 or the entire outer surface 11).

In some embodiments in which the inner surface 10 of the container 2 is defined by the thermoformable film 4, the detector 21 is advantageously positioned above the container 2, in such a way that along each observation line 23 of the detector 21 no element is interposed between the detector 21 and the thermoformable film 4 of the container 2 which prevents the detector 21 from receiving the electromagnetic radiation emitted in the expected response band by the entire first layer 5 of plastic material of the container 2. One embodiment of this type is advantageous since it allows the detector 21 to receive the electromagnetic radiation emitted in the expected response band by the entire first layer 5 of plastic material of the container 2 in a single acquisition. As previously described with reference to the method embodiments are possible in which interposed between the detector 21 and the thermoformable film 4 is the supporting skeleton 3, which is at least partly transparent in accordance with the above-mentioned description.

In other embodiments in which the detector 21 is associated with the conveyor 18 (as for example in the thermoforming apparatus 1 shown in Figure 2 and 4), the detector 21 may be configured and positioned to receive, at a predetermined moment, electromagnetic radiation emitted in the expected response band only by a portion of the first layer 5 of plastic material of the container 2 and not by the entire first layer 5 of plastic material. In this case, the detector 21 may also be configured to perform a plurality of successive detections while the container 2 is made to move forward by the conveyor 18, for receiving electromagnetic radiation emitted by all of the successive portions of the first layer 5 of plastic material of the container 2 which gradually enter its field of vision 24; in this way the detector 21 receives as a whole electromagnetic radiation emitted by the entire first layer 5 of plastic material of the container 2 and the checking device 19 is capable of checking the entire first layer 5 of plastic material. In particular, the detector 21 can receive the electromagnetic radiation emitted only by a portion of the first layer 5 of plastic material of the container 2 when interposed between the detector 21 and the container 2 there is a shielding element which has an opening with limited size: only the electromagnetic radiation emitted by the first layer 5 of plastic material which passes through the opening is received by detector 21 (therefore only that emitted by a portion of the first layer 5 of plastic material of the container 2). This situation may occur for example if the detector 21 is placed below the conveyor 18; advantageously the conveyor 18 will have an opening transversal to its extent, with a size smaller than that of the containers 2 which it must convey.

In some of these embodiments it is possible that the detector 21 is configured to continuously detect the electromagnetic radiation in the expected response band and to continuously send the information about the electromagnetic radiation received to the electronic processing unit.

In other possible embodiments, the detector 21 can be configured to perform the detections at regular time intervals set depending on the conveying speed of the conveyor 18. For example, it is possible either that the successive detections are performed in such a way as to receive electromagnetic radiation emitted by partly overlapping portions of the first layer 5 of plastic material (preferred solution), or that successive detections are performed in such a way as to receive electromagnetic radiation emitted by adjacent portions of the first layer 5 of plastic material (that is to say, which only share the edge).

In some embodiments, the detector 21 can be configured to perform the detections at irregular time intervals set depending on the position of the container 2, in this case too in such a way as to receive radiation from portions which on each occasion are partly overlapping or adjacent. In particular, the checking device 19 may also comprise a trigger element connected to the electronic processing unit for detecting, for example, the arrival of the container 2 in a predetermined position, in such a way that the electronic processing unit consequently activates the detector 21 (and if necessary the emitter 20)

What was described with reference to the detector 21 associated with the conveyor 18, is advantageously performed while the conveyor 18 moves the container 2 along the movement path, without stopping it when the detector 21 performs the detections for receiving the electromagnetic radiation. However, in some embodiments, it is also possible that the conveyor 18 stops the container 2 and that the detector 21 receives the electromagnetic radiation emitted in the expected band by the portion of the first layer 5 of plastic material of the container 2 within its field of vision 24, when the container 2 itself is stationary. Essentially, in the former case the container 2 is moved continuously by the conveyor 18, whilst in the latter case the container 2 is moved intermittently.

In the preferred embodiments, the detector 21 comprises an image acquisition device and the information which the electronic processing unit receives from the detector 21 is at least one acquired image 9 of the container 2. For example, in the embodiments in which the first layer 5 of plastic material emits electromagnetic radiation in an expected response band which comprises the visible band, the detector 21 comprises a digital camera.

In some embodiments, the detector 21 is constituted of the image acquisition device.

If the detector 21 comprises the image acquisition device and is configured to perform a plurality of successive detections for receiving electromagnetic radiation emitted by all of the successive portions of the first layer 5 of plastic material of the container 2 which gradually enter its field of vision 24, the detector 21 generates a partial acquired image 9 for each of those portions. In this case, at least one of the detector 21 or the electronic processing unit may also be programmed to combine the partial acquired images 9 and to generate an overall acquired image 9 of the entire container 2 using common techniques for combining multiple images of different parts of an object. Alternatively, the electronic processing unit may be programmed to process each partial acquired image 9 to detect the defects 6, as explained in more detail below.

In the embodiments in which the detector 21 comprises the image acquisition device and in which the information which the electronic processing unit receives is at least one acquired image 9 (whole or partial), the electronic processing unit is programmed to detect the defects 6 in the container 2 by means of a processing of the acquired image 9, in particular by performing the examining sub-step described above.

In more detail, in some embodiments the electronic processing unit is programmed to process the image received from the detector 21 by means of an image processing algorithm based on a comparison between the image received and an expected image 13 of the container 2. One possible embodiment of this type is based on an electronic processing unit which is programmed to perform the steps previously described with reference to the image processing algorithm which is based on the comparison between the intensity of the images (respectively of the image received and the expected image 13).

In some embodiments of the thermoforming apparatus 1, the electronic processing unit is programmed to process the image received from the detector 21 by means of an algorithm based on artificial intelligence, in particular in accordance with what was described above with regard to the method.

However, it must be emphasised that, depending on the embodiments, it is possible that the electronic processing unit is programmed to process, by means of the algorithm based on artificial intelligence, directly the image received from the detector 21 or the image received from the detector 21 previously processed by the same electronic processing unit by means of the image processing algorithm based on the comparison between the image received and the expected image 13 of the container 2. Essentially, the algorithm based on artificial intelligence and the image processing algorithm based on the comparison between the images can be used either independently of each other, or combined with each other (in any order).

In some embodiments of the thermoforming apparatus 1, the emitter 20 emits the electromagnetic radiation in a predetermined excitation band which comprises the ultraviolet band. Advantageously, the emitter 20 emits the electromagnetic radiation in a predetermined excitation band which is constituted of the ultraviolet band. These embodiments are particularly advantageous when the thermoforming apparatus 1 is intended to use a thermoformable film 4 in which the indicator is a fluorescent-based substance, in particular of the type described above. Other embodiments are also possible in accordance with what was previously described for the method.

In some embodiments, the thermoforming apparatus 1 also comprises an expelling device 25 which is associated with the conveyor 18. The expelling device 25 is connected to and controlled by the electronic processing unit. The function of the expelling device 25 is to prevent a container 2 in which at least one defect 6 was detected (a defective container 2) from reaching the outfeed station 16. In the embodiments illustrated in the figures, the expelling device 25 is positioned at a fork in the conveyor 18: a first stretch 26 of the conveyor 18 extends from the fork as far as the outfeed station 16, whilst a second stretch 27 of the conveyor 18 extends from the fork as far as a rejecting station 28. Advantageously, the expelling device 25 comprises a diverting element (not shown in the figures) which is movable between an operating position and a non-operating position When the diverting element is in the operating position, it diverts the container 2 along the second stretch 27 of the conveyor 18 towards the rejecting station 28, whilst when the diverting element is in the non-operating position, it allows movement of the container 2 along the first stretch 26 of the conveyor 18 towards the outfeed station 16. In more detail, the diverting element is moved from the non-operating position to the operating position, as a result of a command from the electronic processing unit, when it has detected at least one defect 6 in the container 2 (defective container 2), in such a way as to divert that defective container 2 along the second stretch 27, and therefore towards the rejecting station 28. In contrast, the diverting element is kept in the non-operating position when the electronic processing unit has not detected any defect 6 in the container 2 (suitable container 2), in such a way that the suitable container 2 reaches the outfeed station 16.

Other embodiments of the expelling device 25 and of the relative diverting element are possible. For example the expelling device 25 may comprise a diverting element comprising a piston which pushes the defective container 2 towards the second stretch 27 of the conveyor 18. Moreover, in some embodiments the first stretch 26 and the second stretch 27 of the conveyor 18 are placed one above the other and the expelling device 25 comprises a third stretch of the conveyor 18 which is movable between a non-operating position in which it is aligned with the first stretch 26 and an operating position in which it is aligned with the second stretch 27. In other embodiments, the conveyor 18 comprises the first stretch 26 and the third stretch but not the second stretch 27; in that case, when the third stretch is in the operating position it is oriented downwards and unloads the defective container 2 directly into a collecting unit placed below the conveyor 18.

In some embodiments, the electronic processing unit is also programmed to monitor the operation of the thermoforming apparatus 1 saving and examining data about the production of defective containers 2 (that is to say, to perform the monitoring step described above). In particular, the electronic processing unit is programmed to save data about the quality of each container 2 made, that is to say, about the result of the examination of each container 2; preferably it can save whether the container 2 is suitable or defective and, in the latter case, advantageously, also the reasons which led it to be classed as defective (see what was described above with regard to the method).

Moreover, the electronic processing unit is programmed to perform a processing of that data, as described above with regard to the method.

Advantageously, the electronic processing unit can be programmed to also perform the optimising step, that is to say, to vary operating parameters of the thermoforming device 8 based on the results obtained from the processing of the data of the monitoring step. For example, it is possible that the electronic processing unit is operatively connected to the thermoforming device 8 to modify the operating parameters of the thermoforming device 8 (for example, as already described, the temperature, the pressure, the time). In some cases it may be possible that the variation of the operating parameters of the thermoforming device 8 is communicated to an operator and/or must be confirmed by the operator.

It must be emphasised that what was described with reference to the thermoforming apparatus 1 is not constrained to a single-lane thermoforming apparatus 1. In fact, this invention can also be applied in thermoforming apparatuses 1 of a type different from single-lane thermoforming apparatuses 1, such as for example those of the double-lane type or, more generally, multi-lane thermoforming apparatuses 1.

This invention brings important advantages.

In fact, thanks to this invention, it was possible to define a method for making a container comprising a supporting skeleton and a film coupled to the supporting skeleton and to make an apparatus, which allow the risk of generating defects due to nonoptimal adherence between the film and the supporting skeleton to be avoided or minimised thanks to the check of the quality of the coupling.

In particular, it was possible to define a method for making a container comprising a supporting skeleton and a thermoformable film coupled to the supporting skeleton, and to make a thermoforming apparatus, which allow containers to be made using a thermoformable film with a thickness which is less than those currently used in the sector. That allows the use of a smaller quantity of material, cutting the costs and reducing the difficulties linked to recycling of the material.

Finally, it should be noticed that this invention is relatively easy to produce and that even the cost linked to implementing the invention is not very high. The invention described above may be modified and adapted in several ways without thereby departing from the scope of the invention as claimed.

All details may be substituted with other technically equivalent elements and the materials used, as well as the shapes and dimensions of the various components, may vary according to requirements.

## Claims

1. Apparatus for making a container (2) which comprises a supporting skeleton (3) and a film coupled to the supporting skeleton (3), the film and the container (2) comprising at least one first layer (5) of plastic material in which an indicator is distributed which emits electromagnetic radiation in an expected response band when it is excited with electromagnetic radiation in a predetermined excitation band, the apparatus comprising:
- a coupling device, which is configured to couple the film to the supporting skeleton (3) and to make the film adhere to the supporting skeleton (3);
- feeding means (17) associated with the coupling device for feeding, in use, the film and the supporting skeleton (3) to the coupling device;
- a conveyor (18) associated with the coupling device for receiving, in use, the container (2) made and moving it towards an outfeed station (16); and
- a checking device (19) which is operatively associated with at least one of either the coupling device or the conveyor (18) for detecting defects (6) of the container (2), with regard to adherence between the film and the supporting skeleton (3),
wherein the checking device (19) for the container (2) comprises:
an emitter (20) configured to emit electromagnetic radiation in the predetermined excitation band and to direct it towards the container (2);
a detector (21) configured to receive electromagnetic radiation emitted in the expected response band by the container (2), as a result of the excitation by the emitter (20); and
an electronic processing unit connected to the detector (21) for receiving from it, in digital format, information about the electromagnetic radiation received by detector (21), and which is programmed to determine the presence or absence of said defects (6) by means of a processing of the information received from the detector (21).

2. The apparatus according to claim 1, wherein the detector (21) has a plurality of observation lines (23) and is positioned in such a way that, in use, each observation line (23) intercepts the first layer (5) of plastic material of the container (2) only once.

3. The apparatus according to claim 1 or 2, wherein the detector (21) is configured and positioned to simultaneously receive electromagnetic radiation emitted by the entire first layer (5) of plastic material of the container (2).

4. The apparatus according to claim 1 or 2, wherein the detector (21) is associated with the conveyor (18) and is configured and positioned to receive electromagnetic radiation emitted by a portion of the first layer (5) of plastic material of the container (2), and to perform a plurality of detections while the container (2) is made to move forward by the conveyor (18) for receiving electromagnetic radiation emitted by successive portions of the first layer (5) of plastic material of the container (2), in such a way that the detector (21) receives as a whole electromagnetic radiation emitted by the entire first layer (5) of plastic material of the container (2).

5. The apparatus according to any one of claims 1 to 4, wherein the detector (21) comprises an image acquisition device and the information which the electronic processing unit receives from the detector (21) is at least one acquired image (9).

6. The apparatus according to claim 5, wherein the electronic processing unit is programmed to detect said defects (6) by means of a processing of the at least one acquired image (9).

7. The apparatus according to claim 5 or 6, wherein the electronic processing unit is programmed to process the at least one image received from the detector (21) by means of an image processing algorithm based on a comparison between the at least one image received and an expected image (13) of the container (2).

8. The apparatus according to claim 6 or 7, wherein the electronic processing unit is programmed to process the at least one image received from the detector (21) by means of an algorithm based on artificial intelligence selected from a group comprising: algorithms based on supervised learning techniques, algorithms based on unsupervised learning techniques, algorithms based on reinforcement learning techniques.

9. The apparatus according to any one of claims 1 to 8, wherein the emitter (20) emits electromagnetic radiation in a predetermined excitation band which comprises the ultraviolet band, and wherein the indicator is a fluorescent-based substance and comprises at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-l,3-benzoxazole).

10. The apparatus according to any one of claims 1 to 9, also comprising an expelling device (25) which is associated with the conveyor (18), which is connected to the electronic processing unit and which is controlled by the electronic processing unit for preventing a container (2) in which at least one defect (6) was detected from reaching the outfeed station (16).

11. The apparatus according to any one of claims 1 to 10, wherein the electronic processing unit is also programmed to monitor the operation of the apparatus saving and examining data about the quality of the containers (2) made and to process such data to identify any problems of the apparatus and/or to vary operating parameters of the coupling device.

12. The apparatus according to any one of claims 1 to 11, wherein the film is constituted of a thermoformable film (4), the apparatus is a thermoforming apparatus (1), and the coupling device is constituted of a thermoforming device (8), which is configured to thermoform the thermoformable film (4) on the supporting skeleton (3) and to make the thermoformable film (4) adhere to the supporting skeleton (3).

13. A method for making a container (2) by coupling a film to a supporting skeleton (3), comprising the following steps:
a feeding step, in which the film and the supporting skeleton (3) are fed to a coupling device, the film comprising at least one first layer (5) of plastic material in which an indicator is distributed which emits electromagnetic radiation in an expected response band when it is excited with electromagnetic radiation in a predetermined excitation band;
a coupling step, in which the film is coupled to the supporting skeleton (3) by means of the coupling device to obtain the container (2) by making the film adhere to the supporting skeleton (3), thereby obtaining the container (2) which comprises the first layer (5) of plastic material; and
a checking step, which in turn comprises: an emitting sub-step during which electromagnetic radiation is emitted in a predetermined excitation band towards the container (2); a receiving sub-step, simultaneous with the emitting sub-step, in which there is detection of electromagnetic radiation in an expected response band emitted by the first layer (5) of plastic material of the container (2) as a result of the excitation due to the electromagnetic radiation in the predetermined excitation band; and an examining sub-step, in which information about the electromagnetic radiation detected in the expected response band is examined to determine the presence or absence of defects (6) in the container (2) with regard to adherence between the film and the supporting skeleton (3).

14. The method according to claim 13, wherein the information about the electromagnetic radiation in the expected response band is at least one acquired image (9), in the checking step said defects (6) being detected by means of a processing of the at least one acquired image (9).

15. The method according to claim 14, wherein during the checking step the at least one acquired image (9) is processed by means of at least one image processing algorithm based on a comparison between the at least one acquired image (9) and an expected image (13) of the container (2).

16. The method according to claim 14 or 15, wherein during the checking step the at least one acquired image (9) is processed by means of an algorithm based on artificial intelligence selected from a group comprising: algorithms based on supervised learning techniques, algorithms based on unsupervised learning techniques, algorithms based on reinforcement learning techniques.

17. The method according to any one of claims 13 to 16, also comprising an unloading step, in which the containers (2) made are moved towards an outfeed station (16), the checking step being carried out during the unloading step.

18. The method according to any one of claims 13 to 17, also comprising a rejecting step, performed after the checking step, in which the containers (2) for which, during the checking step, at least one defect (6) of the container (2) was detected concerning adherence between the film and the supporting skeleton (3) are rejected.

19. The method according to any one of claims 13 to 18, wherein the predetermined excitation band of the electromagnetic radiation emitted during the checking step comprises the ultraviolet band, and wherein the indicator is a fluorescent-based substance and comprises at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-l,3- benzoxazole).

20. The method according to any one of claims 13 to 19, comprising a monitoring step in which data about the quality of the containers (2) made is saved and examined.

21. The method according to claim 20, also comprising an optimising step in which the data about the quality of a group of containers (2) made saved during the monitoring step, is processed to identify any problems of the coupling step and/or to vary operating parameters of the coupling device.

22. The method according to any one of claims 13 to 21, wherein the film is constituted of a thermoformable film (4) and the coupling device is constituted of a thermoforming device (8), and wherein the coupling step is a thermoforming step during which the thermoformable film (4) is thermoformed on the supporting skeleton (3) by means of the thermoforming device (8) to obtain the container (2) by making the thermoformable film (4) adhere to the supporting skeleton (3).

23. A container made by coupling a film to a supporting skeleton (3), comprising at least one first layer (5) of plastic material in which an indicator is distributed which emits electromagnetic radiation in an expected response band when it is excited with electromagnetic radiation in a predetermined excitation band, the first layer (5) of plastic material being a layer of material suitable for constituting a barrier to oxygen.

24. The container according to claim 23, wherein the indicator is a fluorescent-based substance and comprises at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-l,3-benzoxazole), the indicator emitting the electromagnetic radiation in the expected response band when it is excited with electromagnetic radiation in a predetermined excitation band which comprises the ultraviolet band.

25. The container according to claim 23 or 24, wherein the first layer (5) of plastic material has a thickness of between 0.5 µm and 10 µm, preferably less than or equal to 5 µm, even more preferably of between 2 µm and 3 µm.

26. The container according to any one of claims 23 to 25, wherein the film is constituted of a thermoformable film (4) and wherein the thermoformable film (4) is thermoformed on the supporting skeleton (3).

## Patentansprüche

1. Eine Vorrichtung zur Herstellung eines Behälters (2), die eine Stützstruktur (3) und eine Folie, die mit der Stützstruktur (3) verbunden ist, beinhaltet, die Folie und der Behälter (2) beinhalten dabei mindestens eine erste Schicht (5) aus Kunststoff, in der ein Indikator verteilt ist, der elektromagnetische Strahlung in einem erwarteten Antwortbereich aussendet, wenn er mit elektromagnetischer Strahlung in einem vorher festgelegten Anregungsbereich angeregt wird, die Vorrichtung beinhaltet dabei Folgendes:
- Eine Verbindungsvorrichtung, die dazu ausgerichtet ist, die Folie mit der Stützstruktur (3) zu verbinden und dafür zu sorgen, dass die Folie an der Stützstruktur (3) haftet;
- Zuführmittel (17), die mit der Verbindungsvorrichtung verknüpft sind, um im Gebrauch die Folie und die Stützstruktur (3) der Verbindungsvorrichtung zuzuführen;
- einen Förderer (18), der mit der Verbindungsvorrichtung verknüpft ist, um im Gebrauch den hergestellten Behälter (2) entgegenzunehmen und ihn zu einer Ausgabestation (16) zu bewegen; und
- eine Kontrollvorrichtung (19), die operativ mit mindestens einer der beiden Vorrichtungen, entweder mit der Verbindungsvorrichtung oder dem Förderer (18), verbunden ist, um Defekte (6) des Behälters (2) in Bezug auf die Haftung zwischen der Folie und der Stützstruktur (3) zu erfassen, wobei die Kontrollvorrichtung (19) für den Behälter (2) Folgendes beinhaltet:
einen Sender (20), der dazu ausgerichtet ist, elektromagnetische Strahlung in dem vorher festgelegten Anregungsbereich zu emittieren und sie in Richtung des Behälters (2) zu lenken;
einen Detektor (21), der dazu ausgerichtet ist, elektromagnetische Strahlung, die, als Ergebnis der Anregung durch den Sender (20), in dem erwarteten Antwortbereich vom Behälter (2) emittiert wird, zu empfangen; und
eine elektronische Verarbeitungseinheit, die mit dem Detektor (21) verbunden ist, um von diesem Informationen in digitalem Format über die elektromagnetische Strahlung, die vom Detektor (21) empfangen wurde, zu erhalten, und die dazu programmiert ist, das Vorhandensein oder das Fehlen besagter Defekte (6) anhand einer Verarbeitung der vom Detektor (21) empfangenen Informationen festzustellen.

2. Die Vorrichtung nach dem Patentanspruch 1, wobei der Detektor (21) eine Mehrzahl von Beobachtungslinien (23) hat und so positioniert ist, dass im Gebrauch jede Beobachtungslinie (23) die erste Schicht (5) aus Kunststoff des Behälters (2) nur einmal abfängt.

3. Die Vorrichtung nach dem Patentanspruch 1 oder 2, wobei der Detektor (21) so ausgerichtet und positioniert ist, um gleichzeitig elektromagnetische Strahlung zu empfangen, die von der gesamten ersten Schicht (5) aus Kunststoff des Behälters (2) emittiert wird.

4. Die Vorrichtung nach dem Patentanspruch 1 oder 2, wobei der Detektor (21) mit dem Förderer (18) verknüpft ist und so ausgerichtet und positioniert ist, um elektromagnetische Strahlung zu empfangen, die von einem Abschnitt der ersten Schicht (5) aus Kunststoff des Behälters (2) emittiert wird, und um eine Mehrzahl von Erfassungen durchzuführen, während der Behälter (2) vom Förderer (18) dazu gebracht wird, sich vorwärts zu bewegen, um elektromagnetische Strahlung, die von folgenden Abschnitten der ersten Schicht (5) aus Kunststoff des Behälters (2) emittiert wird, zu empfangen, solcherart, dass der Detektor (2) elektromagnetische Strahlung, die von der gesamten ersten Schicht (5) aus Kunststoff des Behälters (2) emittiert werden, als Ganzes empfängt.

5. Die Vorrichtung nach jedem der Patentansprüche 1 bis 4, wobei der Detektor (21) ein Bildaufnahmegerät beinhaltet und die Informationen, die die elektronische Verarbeitungseinheit vom Detektor (21) empfängt, mindestens ein aufgenommenes Bild (9) sind.

6. Die Vorrichtung nach dem Patentanspruch 5, wobei die elektronische Verarbeitungseinheit dazu programmiert ist, besagte Defekte (6) anhand einer Verarbeitung des mindestens einen aufgenommenen Bilds (9) zu erfassen.

7. Die Vorrichtung nach dem Patentanspruch 5 oder 6, wobei die elektronische Verarbeitungseinheit dazu programmiert ist, das mindestens eine vom Detektor (21) empfangene Bild mithilfe eines Bildverarbeitungsalgorithmus zu verarbeiten, der auf einem Vergleich zwischen dem mindestens einen empfangenen Bild und einem erwarteten Bild (13) des Behälters (2) beruht.

8. Die Vorrichtung nach dem Patentanspruch 6 oder 7, wobei die elektronische Verarbeitungseinheit dazu programmiert ist, das mindestens eine vom Detektor (21) empfangene Bild mithilfe eines Algorithmus zu verarbeiten, der auf künstlicher Intelligenz beruht, die aus einer Gruppe ausgewählt ist, die Folgendes umfasst: Algorithmen, die auf Methoden des überwachten Lernens beruhen, Algorithmen, die auf Methoden des unüberwachten Lernens beruhen, Algorithmen, die auf Methoden des verstärkenden Lernens beruhen.

9. Die Vorrichtung nach jedem der Patentansprüche 1 bis 8, wobei der Sender (20) elektromagnetische Strahlung in einem vorher festgelegten Anregungsbereich emittiert, der den Ultraviolettbereich umfasst, und wobei der Indikator eine leuchtstoffbasierte Substanz ist und mindestens ein Element umfasst, das aus einer Gruppe ausgewählt ist, die aus Folgendem besteht: Ultraviolettindikatoren, Infratorindikatoren, Farbstoffen, Pigmenten, optischen Aufhellern, fluoreszierenden Aufhellern, Anthrachinonfarbstoffen, 2,2'-(2,5-Thiophenylenediyl)bis(5-tert-butylbenzoxazol), Hydroxyl-4- )p- Tolylamin)anthracen-9,10-dion, 2,5-Thiophenediylbis(5-tert-butyl-1,3-benzoxazol).

10. Die Vorrichtung nach jedem der Patentansprüche 1 bis 9, auch eine Ausstoßvorrichtung (25) beinhaltend, die mit dem Förderer (18) verknüpft ist, die mit der elektronischen Verarbeitungseinheit verbunden ist, und die durch die elektronische Verarbeitungseinheit gesteuert wird, um zu verhindern, dass ein Behälter (2), in dem mindestens ein Defekt (6) erfasst wurde, die Ausgabestation (16) erreicht.

11. Die Vorrichtung nach jedem der Patentansprüche 1 bis 10, wobei die elektronische Verarbeitungseinheit auch dazu programmiert ist, den Betrieb der Vorrichtung zu überwachen, indem sie Daten über die Qualität der hergestellten Behälter (2) speichert und überprüft, und solche Daten zu verarbeiten, um jegliche Probleme der Vorrichtung zu identifizieren und/oder Betriebsparameter der Verbindungsvorrichtung zu verändern.

12. Die Vorrichtung nach jedem der Patentansprüche 1 bis 11, wobei die Folie aus einer Thermoformfolie (4) besteht, die Vorrichtung eine Thermoformvorrichtung (1) ist, und die Verbindungsvorrichtung aus einem Thermoformgerät (8) besteht, das dazu ausgerichtet ist, die Thermoformfolie (4) an der Stützstruktur (3) zu thermoformen und dafür zu sorgen, dass die Thermoformfolie (4) an der Stützstruktur (3) haftet.

13. Ein Verfahren zur Herstellung eines Behälters (2) durch Verbinden einer Folie mit einer Stützstruktur (3), folgende Schritte beinhaltend:
Einen Zuführungsschritt, bei dem die Folie und die Stützstruktur (3) einer Verbindungsvorrichtung zugeführt werden, die Folie beinhaltet dabei mindestens eine erste Schicht (5) aus Kunststoff, in der ein Indikator verteilt ist, der elektromagnetische Strahlung in einem erwarteten Antwortbereich emittiert, wenn er durch elektromagnetische Strahlung in einem vorher festgelegten Anregungsbereich angeregt wird;
einen Verbindungsschritt, bei dem die Folie mithilfe der Verbindungsvorrichtung mit der Stützstruktur (3) verbunden wird, um den Behälter (2) zu erhalten, indem die Folie dazu gebracht wird, an der Stützstruktur (3) zu haften, dadurch den Behälter (2) erhaltend, der die erste Schicht (5) aus Kunststoff beinhaltet; und
einen Kontrollschritt, der seinerseits Folgendes beinhaltet: einen Emissions-Unterschritt, während dessen elektromagnetische Strahlung in einem vorher festgelegten Anregungsbereich in Richtung des Behälters (2) emittiert wird; einen Empfangs-Unterschritt, gleichzeitig mit dem Emissions-Unterschritt, bei dem eine Erfassung elektromagnetischer Strahlung in einem erwarteten Antwortbereich, die von der ersten Schicht (5) aus Kunststoff des Behälters (2) als Ergebnis der Anregung aufgrund der elektromagnetischen Strahlung in dem vorher festgelegten Anregungsbereich emittiert wird, erfolgt; und ein Prüf-Unterschritt, bei dem Informationen über die erfasste elektromagnetische Strahlung in dem erwarteten Antwortbereich überprüft werden, um das Vorhandensein oder das Fehlen von Defekten (6) im Behälter (2) in Bezug auf die Haftung zwischen der Folie und der Stützstruktur (3) festzustellen.

14. Das Verfahren nach dem Patentanspruch 13, wobei die Informationen über die elektromagnetische Strahlung in dem erwarteten Antwortbereich mindestens ein aufgenommenes Bild (9) sind, beim Kontrollschritt (6) werden besagte Defekte (6) dabei anhand der Verarbeitung des mindestens einen aufgenommenen Bilds (9) erfasst.

15. Das Verfahren nach dem Patentanspruch 14, wobei während des Kontrollschritts das mindestens eine aufgenommene Bild (9) anhand mindestens eines bildverarbeitenden Algorithmus verarbeitet wird, der auf einem Vergleich zwischen dem mindestens einen aufgenommenen Bild (9) und einem erwarteten Bild (13) des Behälters (2) beruht.

16. Das Verfahren nach dem Patentanspruch 14 oder 15, wobei während des Kontrollschritts das mindestens eine aufgenommene Bild (9) anhand eines Algorithmus verarbeitet wird, der auf Künstlicher Intelligenz beruht, die aus einer Gruppe ausgewählt ist, die Folgendes umfasst: Algorithmen, die auf Methoden des überwachten Lernens beruhen, Algorithmen, die auf Methoden des unüberwachten Lernens beruhen, Algorithmen, die auf Methoden des verstärkenden Lernens beruhen.

17. Das Verfahren nach jedem der Patentansprüche 13 bis 16, auch einen Entladeschritt beinhaltend, bei dem die hergestellten Behälter (2) in Richtung einer Ausgabestation (16) bewegt werden, der Kontrollschritt wird dabei während des Entladeschritts durchgeführt.

18. Das Verfahren nach jedem der Patentansprüche 13 bis 17, auch einen Ausstoßschritt beinhaltend, der nach dem Kontrollschritt durchgeführt wird, bei dem die Behälter (2), bei denen während des Kontrollschritts mindestens ein Defekt (6) des Behälters (2) erfasst wurde, der die Haftung zwischen der Folie und der Stützstruktur (3) betrifft, ausgestoßen werden.

19. Das Verfahren nach jedem der Patentansprüche 13 bis 18, wobei der vorher festgelegte Anregungsbereich der elektromagnetischen Strahlung, die während des Kontrollschritts emittiert wird, den Ultraviolettbereich umfasst, und wobei der Indikator eine leuchtstoffbasierte Substanz ist und mindestens ein Element beinhaltet, das aus eine Gruppe ausgewählt ist, die aus Folgendem besteht: Ultraviolettindikatoren, Infratorindikatoren, Farbstoffen, Pigmenten, optischen Aufhellern, fluoreszierenden Aufhellern, Anthrachinonfarbstoffen, 2,2'-(2,5-Thiophenylenediyl)bis(5-tert-butylbenzoxazol), Hydroxyl-4- )p- Tolylamin)anthracen-9,10-dion, 2,5-Thiophenediylbis(5-tert-butyl-1,3-benzoxazol).

20. Das Verfahren nach jedem der Patentansprüche 13 bis 19, einen Überwachungsschritt beinhaltend, bei dem Daten über die Qualität der hergestellten Behälter (2) gespeichert und überprüft werden.

21. Das Verfahren nach dem Patentanspruch 20, auch einen Optimierungsschritt beinhaltend, bei dem die Daten über die Qualität einer Gruppe hergestellter Behälter (2), die während des Überwachungsschritts gespeichert wurden, verarbeitet werden, um jegliche Probleme des Verbindungsschritts zu identifizieren und/oder um Betriebsparameter der Verbindungsvorrichtung zu variieren.

22. Das Verfahren nach jedem der Patentansprüche 13 bis 21, wobei die Folie aus einer Thermoformfolie (4) besteht und die Verbindungsvorrichtung aus einem Thermoformgerät (8) besteht, und wobei der Verbindungsschritt ein Thermoformschritt ist, während dessen die Thermoformfolie (4) durch das Thermoformgerät (8) an der Stützstruktur (3) thermogeformt wird, um den Behälter (2) zu erhalten, indem die Thermoformfolie (4) dazu gebracht wird, an der Stützstruktur (3) zu haften.

23. Ein Behälter, der durch die Verbindung einer Folie mit einer Stützstruktur (3) hergestellt wird, mindestens eine erste Schicht (5) aus Kunststoff beinhaltend, in der ein Indikator verteilt ist, der elektromagnetische Strahlung in einem erwarteten Antwortbereich emittiert, wenn er durch elektromagnetische Strahlung in einem vorher festgelegten Anregungsbereich angeregt wird, die erste Schicht (5) aus Kunststoff ist dabei eine Schicht aus einem Material, das sich dazu eignet, eine Sauerstoffbarriere darzustellen.

24. Der Behälter nach dem Patentanspruch 23, wobei der Indikator eine leuchtstoffbasierte Substanz ist und mindestens ein Element umfasst, das aus einer Gruppe ausgewählt ist, die aus Folgendem besteht: Ultraviolettindikatoren, Infratorindikatoren, Farbstoffen, Pigmenten, optischen Aufhellern, fluoreszierenden Aufhellern, Anthrachinonfarbstoffen, 2,2'-(2,5-Thiophenylenediyl)bis(5-tert-butylbenzoxazol), Hydroxyl-4- )p- Tolylamin)anthracen-9,10-dion, 2,5-Thiophenediylbis(5-tert-butyl-1,3-benzoxazol), der Indikator emittiert dabei die elektromagnetische Strahlung in dem erwarteten Antwortbereich, wenn er durch elektromagnetische Strahlung in einem vorher festgelegten Anregungsbereich, der den Ultraviolettbereich umfasst, angeregt wird.

25. Der Behälter nach dem Patentanspruch 23 oder 24, wobei die erste Schicht (5) aus Kunststoff eine Dicke zwischen 0,5 pm und 10 pm hat, vorzugsweise weniger oder gleich 5 pm, besonders bevorzugt zwischen 2 pm und 3 pm.

26. Der Behälter nach jedem der Patentansprüche 23 bis 25, wobei die Folie aus einer Thermoformfolie (4) besteht und wobei die Thermoformfolie (4) an der Stützstruktur (3) thermogeformt wird.

## Revendications

1. Un appareil pour la fabrication d'un récipient (2) qui comprend une ossature de support (3) et un film couplé à l'ossature de support (3), le film et le récipient (2) comprenant au moins une première couche (5) de matière plastique dans laquelle est distribué un indicateur qui émet un rayonnement électromagnétique dans une bande de réponse attendue lorsqu'il est excité avec un rayonnement électromagnétique dans une bande d'excitation prédéfinie, l'appareil comprenant :
- un dispositif d'accouplement, qui est configuré pour coupler le film à l'ossature de support (3) et pour faire adhérer le film à l'ossature de support (3) ;
- des moyens d'alimentation (17) associés au dispositif d'accouplement pour alimenter, en utilisation, le film et l'ossature de support (3) au dispositif d'accouplement ;
- un convoyeur (18) associé au dispositif d'accouplement pour recevoir, en utilisation, le récipient (2) réalisé et l'acheminer vers une station de sortie (16) ; et
- un dispositif de contrôle (19) qui est opérationnellement associé avec au moins l'un entre le dispositif d'accouplement et le convoyeur (18) pour détecter des défauts (6) du récipient (2), en rapport avec une adhérence entre le film et l'ossature de support (3),
dans lequel le dispositif de contrôle (19) du récipient (2) comprend :
un émetteur (20) configuré pour émettre un rayonnement électromagnétique dans la bande d'excitation prédéfinie et pour le diriger vers le récipient (2) ;
un détecteur (21) configuré pour recevoir le rayonnement électromagnétique émis dans la bande de réponse attendue par le récipient (2), à la suite de l'excitation par l'émetteur (20) ; et
une unité électronique de traitement reliée au détecteur (21) pour recevoir de celui-ci, au format numérique, des informations sur le rayonnement électromagnétique reçu par le détecteur (21), et qui est programmée pour déterminer la présence ou l'absence desdits défauts (6) via un traitement des informations reçues dudit détecteur (21).

2. L'appareil selon la revendication 1, dans lequel le détecteur (21) a une pluralité de directions d'observation (23) et est positionné de manière à ce que, en utilisation, chaque direction d'observation (23) intercepte une seule fois la première couche (5) de matière plastique du récipient (2) .

3. L'appareil selon la revendication 1 ou 2, dans lequel le détecteur (21) est configuré et positionné pour recevoir simultanément un rayonnement électromagnétique émis par toute la première couche (5) de matière plastique du récipient (2).

4. L'appareil selon la revendication 1 ou 2, dans lequel le détecteur (21) est associé avec le convoyeur (18) et est configuré et positionné pour recevoir un rayonnement électromagnétique émis par une portion de la première couche (5) de matière plastique du récipient (2), et pour effectuer une pluralité de détections alors que le récipient (2) est entraîné à avancer par le convoyeur (18) pour recevoir un rayonnement électromagnétique émis par des portions successives de la première couche (5) de matière plastique du récipient (2), de manière à ce que le détecteur (21) reçoive un rayonnement électromagnétique dans son ensemble émis par toute la première couche (5) de matière plastique du récipient (2).

5. L'appareil selon l'une quelconque des revendications de 1 à 4, dans lequel le détecteur (21) comprend un dispositif d'acquisition d'images et les informations que l'unité électronique de traitement reçoit du détecteur (21) sont au moins une image acquise (9).

6. L'appareil selon la revendication 5, dans lequel l'unité électronique de traitement est programmée pour détecter lesdits défauts (6) via un traitement de ladite au moins une image acquise (9).

7. L'appareil selon la revendication 5 ou 6, dans lequel l'unité électronique de traitement est programmée pour traiter ladite au moins une image reçue du détecteur (21) au moyen d'un algorithme de traitement d'images basé sur une comparaison entre ladite au moins une image reçue et une image attendue (13) du récipient (2).

8. L'appareil selon la revendication 6 ou 7, dans lequel l'unité électronique de traitement est programmée pour traiter ladite au moins une image reçue du détecteur (21) au moyen d'un algorithme basé sur intelligence artificielle sélectionné dans un groupe comprenant : algorithmes basés sur des techniques d'apprentissage supervisé, algorithmes basés sur des techniques d'apprentissage non supervisé, algorithmes basés sur des techniques d'apprentissage par renforcement.

9. L'appareil selon l'une quelconque des revendications de 1 à 8, dans lequel l'émetteur (20) émet un rayonnement électromagnétique dans une bande d'excitation prédéfinie qui comprend la bande de l'ultraviolet, et dans lequel l'indicateur est une substance à base fluorescente et comprend au moins un élément sélectionné dans un groupe constitué de : indicateur ultraviolet, indicateur infrarouge, colorant, pigment, azurant optique, agent d'azurage fluorescent, colorant d'anthraquinone, 2,2'-(2,5-thiophenylenediyl)bis(5-tert-butylbenzoxazole), hydroxyl-4- )p- tolylamino)anthracene-9,10-dione, 2,5-thiophenediylbis(5-tert-butyl-1,3- benzoxazole).

10. L'appareil selon l'une quelconque des revendications de 1 à 9, comprenant également un dispositif d'éjection (25) qui est associé avec le convoyeur (18), qui est relié à l'unité électronique de traitement et qui est commandé par l'unité électronique de traitement pour empêcher qu'un récipient (2) dans lequel au moins un défaut (6) a été détecté n'atteigne la station de sortie (16).

11. L'appareil selon l'une quelconque des revendications de 1 à 10, dans lequel l'unité électronique de traitement est également programmée pour surveiller le fonctionnement de l'appareil en enregistrant et en examinant des données sur la qualité des récipients (2) réalisés et pour traiter ces données afin d'identifier tout problème de l'appareil et/ou afin de modifier des paramètres de fonctionnement du dispositif d'accouplement.

12. L'appareil selon l'une quelconque des revendications de 1 à 11, dans lequel le film est constitué d'un film thermoformable (4), l'appareil est un appareil de thermoformage (1), et le dispositif d'accouplement est constitué d'un dispositif de thermoformage (8), qui est configuré pour thermoformer le film thermoformable (4) sur l'ossature de support (3) et pour faire adhérer le film thermoformable (4) à l'ossature de support (3).

13. Un procédé de fabrication d'un récipient (2) par couplage d'un film à une ossature de support (3), comprenant les étapes suivantes :
une étape d'alimentation, au cours de laquelle le film et l'ossature de support (3) sont alimentés au dispositif d'accouplement, le film comprenant au moins une première couche (5) de matière plastique dans laquelle est distribué un indicateur qui émet un rayonnement électromagnétique dans une bande de réponse attendue lorsqu'il est excité avec un rayonnement électromagnétique dans une bande d'excitation prédéfinie ;
une étape d'accouplement, au cours de laquelle le film est couplé à l'ossature de support (3) au moyen du dispositif d'accouplement pour obtenir le récipient (2) en faisant adhérer le film à l'ossature de support (3), obtenant ainsi le récipient (2) qui comprend la première couche (5) de matière plastique ; et
une étape de contrôle, qui comprend à son tour : une sous-étape d'émission pendant laquelle un rayonnement électromagnétique est émis dans une bande d'excitation prédéfinie vers le récipient (2) ; une sous-étape de réception, simultanée à la sous-étape d'émission, qui prévoit la détection d'un rayonnement électromagnétique dans une bande de réponse attendue émis par la première couche (5) de matière plastique du récipient (2) à la suite de l'excitation due au rayonnement électromagnétique dans une bande d'excitation prédéfinie ; et une sous-étape d'examen, pendant laquelle des informations sur le rayonnement électromagnétique détecté dans la bande de réponse attendue sont examinées pour déterminer la présence ou l'absence de défauts (6) dans le récipient (2) en rapport avec une adhérence entre le film et l'ossature de support (3).

14. Le procédé selon la revendication 13, dans lequel les informations sur le rayonnement électromagnétique dans la bande de réponse attendue sont au moins une image acquise (9), dans l'étape de contrôle lesdits défauts (6) étant détectés au moyen d'un traitement de ladite au moins une image acquise (9).

15. Le procédé selon la revendication 14, dans lequel, au cours de l'étape de contrôle, ladite au moins une image acquise (9) est traitée au moyen d'au moins un algorithme de traitement d'images basé sur une comparaison entre ladite au moins une image acquise (9) et une image attendue (13) du récipient (2).

16. Le procédé selon la revendication 14 ou 15, dans lequel, au cours de l'étape de contrôle, ladite au moins une image acquise (9) est traitée au moyen d'un algorithme basé sur intelligence artificielle sélectionné dans un groupe comprenant : algorithmes basés sur des techniques d'apprentissage supervisé, algorithmes basés sur des techniques d'apprentissage non supervisé, algorithmes basés sur des techniques d'apprentissage par renforcement.

17. Le procédé selon l'une quelconque des revendications de 13 à 16, comprenant également une étape de déchargement, au cours de laquelle les récipients (2) réalisés sont acheminés vers une station de sortie (16), l'étape de contrôle étant effectuée pendant l'étape de déchargement.

18. Le procédé selon l'une quelconque des revendications de 13 à 17, comprenant également une étape d'éjection, effectuée après l'étape de contrôle, au cours de laquelle sont éjectés les récipients (2) pour lesquels, pendant l'étape de contrôle, au moins un défaut (6) du récipient (2) a été détecté concernant l'adhérence entre le film et l'ossature de support (3) .

19. Le procédé selon l'une quelconque des revendications de 13 à 18, dans lequel la bande d'excitation prédéfinie du rayonnement électromagnétique émis pendant l'étape de contrôle comprend la bande de l'ultraviolet, et dans lequel l'indicateur est une substance à base fluorescente et comprend au moins un élément sélectionné dans un groupe constitué de : indicateur ultraviolet, indicateur infrarouge, colorant, pigment, azurant optique, agent d'azurage fluorescent, colorant d'anthraquinone, 2,2'-(2,5-thiophenylenediyl)bis(5-tert-butylbenzoxazole), hydroxyl-4- )p-tolylamino)anthracene-9,10-dione, 2,5-thiophenediylbis(5-tert- butyl-1,3- benzoxazole).

20. Le procédé selon l'une quelconque des revendications de 13 à 19, comprenant une étape de surveillance au cours de laquelle des données sur la qualité des récipients (2) réalisés sont enregistrées et examinées.

21. Le procédé selon la revendication 20, comprenant également une étape d'optimisation au cours de laquelle les données sur la qualité d'un groupe de récipients (2) réalisés, enregistrées pendant l'étape de surveillance, sont traitées pour identifier tout problème de l'étape d'accouplement et/ou pour modifier des paramètres de fonctionnement du dispositif d'accouplement.

22. Le procédé selon l'une quelconque des revendications de 13 à 21, dans lequel le film est constitué d'un film thermoformable (4) et le dispositif d'accouplement est constitué d'un dispositif de thermoformage (8), et dans lequel l'étape d'accouplement est une étape de thermoformage au cours de laquelle le film thermoformable (4) est thermoformé sur l'ossature de support (3) au moyen du dispositif de thermoformage (8) pour obtenir le récipient (2) en faisant adhérer le film thermoformable (4) à l'ossature de support (3).

23. Un récipient réalisé par couplage d'un film à une ossature de support (3), comprenant au moins une première couche (5) de matière plastique dans laquelle est distribué un indicateur qui émet un rayonnement électromagnétique dans une bande de réponse attendue lorsqu'il est excité avec un rayonnement électromagnétique dans une bande d'excitation prédéfinie, la première couche (5) de matière plastique étant une couche de matière destinée à constituer une barrière à l'oxygène.

24. Le récipient selon la revendication 23, dans lequel l'indicateur est une substance à base fluorescente et comprend au moins un élément sélectionné dans un groupe constitué de : indicateur ultraviolet, indicateur infrarouge, colorant, pigment, azurant optique, agent d'azurage fluorescent, colorant d'anthraquinone, 2,2'-(2,5-thiophenylenediyl)bis(5-tert-butylbenzoxazole), hydroxyl-4- )p- tolylamino)anthracene-9,10-dione, 2,5-thiophenediylbis(5-tert-butyl-1,3- benzoxazole), l'indicateur émettant le rayonnement électromagnétique dans la bande de réponse attendue lorsqu'il est excité avec un rayonnement électromagnétique dans une bande d'excitation prédéfinie qui comprend la bande de l'ultraviolet.

25. Le récipient selon la revendication 23 ou 24, dans lequel la première couche (5) de matière plastique a une épaisseur comprise entre 0,5 µm et 10 pm, de préférence inférieure ou égale à 5 pm, de façon encore plus préférée comprise entre 2 µm et 3 µm.

26. Le récipient selon l'une quelconque des revendications de 23 à 25, dans lequel le film est constitué d'un film thermoformable (4) et dans lequel le film thermoformable (4) est thermoformé sur l'ossature de support (3).
